# EUROPEAN PATENT SPECIFICATION

(11) **EP 0 409 291 B1**
(45) Date of publication and mention of the grant of the patent: **14.02.1996**
(21) Application number: 90117635.4
(22) Date of filing: 15.11.1988
(51) Int. Cl.: C08G 61/08, C08L 65/00, C08L 25/06, C08L 27/06, C08L 77/02

(54) **Thermoplastic resin composition**
Thermoplastische Harzzusammensetzung
Composition de résine thermoplastique

(30) Priority: 17.11.1987 JP 288527/87; 17.11.1987 JP 288528/87
(43) Date of publication of application: 23.01.1991
(62) Divisional of application: 88310771.6
(73) Proprietor: JAPAN SYNTHETIC RUBBER CO., LTD., Tokyo 104 (JP)
(72) Inventor: Goto, Kohei, Morigayamacho, Yokkaichi-shi (JP); Komiya, Zen, Morigayamacho, Yokkaichi-shi (JP); Iio, Akira, Morigayamacho, Yokkaichi-shi (JP); Yamahara, Noboru, Yokkaichi-shi (JP)
(74) Representative: Clifford, Frederick Alan

(56) References cited:
- EP-A- 0 105 775
- EP-A- 0 303 246
- WPIL, FILE SUPPLIER, AN=85-10282, Derwent Publications Ltd, London, GB; & JP-A-60 049 051 (NIPPON ZEON) 18-03-1985

## Description

This invention relates to a thermoplastic resin composition having excellent impact resistance and ductility.

Homopolymers or copolymers obtained by ring-opening polymerization of a norbornene derivative or derivatives have good optical properties, low hygroscopicity and excellent heat resistance, and therefore, are expected to be applied to various fields.

However, the polymers obtained by ring-opening polymerization (including the homopolymers and the copolymers) (the same applies hereinafter) are low in impact resistance and poor in ductility. It is reported in, for example, Japanese Patent Application Kokoku No. 57-3701 to mix a rubbery polymer therewith for the purpose of remedying the above-mentioned disadvantage. However, this cannot always give a sufficient effect and rather results in deterioration of the characteristics of the polymer in some cases.

### SUMMARY OF THE INVENTION

As a result of extensive research on a solution of the above problems, the inventors of this invention have found that a hydrogenation product of a polymer obtained by ring-opening polymerization of a norbornene derivative or derivatives having a specific polar substituent exhibits, when blended with a specific polymer, has excellent impact resistance and ductility with certainty. They have further found that particularly when a selected polymer or a combination of selected polymers is blended therewith, a thermoplastic resin composition is obtained which has higher transparency and chemical resistance.

The present invention provides a thermoplastic resin composition consisting essentially of (A) 5 to 99% by weight of a hydrogenated polymer having a hydrogenation degree of at least 95% which hydrogenated polymer is a hydrogenation product of a polymer obtained by subjecting at least one norbornene derivative represented by general formula (I) or a mixture of the norbornene derivative and a monomer copoylmerizable therewith to ring-opening polymerization and (B) 95 to 1% by weight of at least one member selected from the group consisting of (B-1) a rubbery polymer and (B-2) a thermoplastic resin: 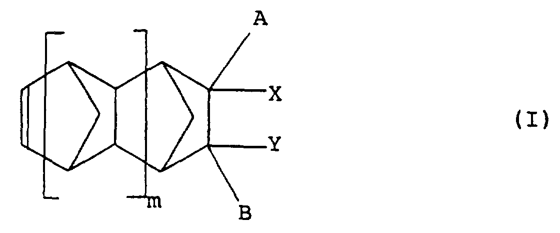 wherein A and B are independently hydrogen atoms or hydrocarbon groups having 1 to 10 carbon atoms; X is a hydrocarbon groups having 1 to 10 carbon atoms; X is a hydrogen atom or a hydrocarbon group having 1 to 10 carbon atoms; Y is a (CH₂)ₙCOOR¹ or (CH₂)ₙ OCOR¹ group (R¹ is a hydrocarbon group having 1 to 20 carbon atoms and n is 0 or an integer of 1 to 10); and M is 0 or 1.

### DETAILED EXPLANATION OF THE INVENTION

### (A) component

The (A) component is a hydrogenated polymer obtained by subjecting to ring-opening polymerization a norbornene derivative represented by general formula (I) (hereinafter referred to as the specific monomer) alone or with a copolymerizable monomer which is copolymerizable therewith to obtain a (co)polymer (hereinafter referred to as the ring-opening (co)polymer) and hydrogenating the ring-opening (co)polymer to obtain a hydrogenated polymer [hereinafter referred to as Hydrogenated Polymer (A)].

In general formula (I), the substituents A and B are preferably hydrocarbon groups for obtaining lower water absorption. However, when the hydrocarbon group has too many carbon atoms the heat resistance becomes inferior. Further, it is desirable to consider ease of monomer synthesis in the selection of the number of carbon atoms. Especially preferably, one of A and B is a methyl group and the other is a hydrogen atom in view of the balance of ease of monomer synthesis and low water absorption.

It is especially preferred that X is a hydrogen atom and Y is -COOR^{1'} or -OCOR^{1'} (R^{1'} is a C₁₋₄ alkyl group or a C₅₋₂₀ cyclic hydrocarbon group).

The substituent Y is preferably an ester group in order to secure adhesion of resin surface without increasing water absorption excessively. X is a hydrocarbon group or hydrogen atom to further reduce water absorption. It is especially preferable that X be a hydrogen atom from the viewpoint of ease of synthesis and the ester group has n being 0 for the purpose of enhancing the heat resistance. On the other hand, it is preferable that the R¹ group in the ester group be a hydrocarbon group having more carbon atoms for lowering the water absorption, while the R¹ group be a hydrocarbon group having less carbon atoms for enhancing the heat resistance. In order to balance the contradictory properties, it is preferable that the number of carbon atoms be 1 to 4.

The optimum compound of general formula (I) are those where m = 1, A = H, B = CH₃ or H, X = H and Y = COOCH₃ or COOC₂H₅.

Specific examples of the tetracyclododecene derivative of general formula (I) where m = 1 include the followings:
8-methoxycarbonyltetracyclo[4.4.0.1ʼ⁵.1⁷ʼ¹⁰]-3-dodecene,
8-ethoxycarbonyltetracyclo[4.4.0.1ʼ⁵]-3-dodecene,
8-n-propoxycarbonyltetracyclo[4.4.0.1ʼ⁵.1⁷ʼ¹⁰]-3-dodecene,
8-isopropoxycarbonyltetracyclo[4.4.0.1ʼ⁵.1⁷ʼ¹⁰]-3-dodecene,
8-n-butoxycarbonyltetracyclo[4.4.0.1ʼ⁵.1⁷ʼ¹⁰]-3-dodecene,
8-isobutoxycarbonyltetracyclo[4.4.0.1ʼ⁵.1⁷ʼ¹⁰]-3-dodecene,
8-sec-butoxycarbonyltetracyclo[4.4.0.1ʼ⁵.1⁷ʼ¹⁰]-3-dodecene,
8-t-butoxycarbonyltetracyclo[4.4.0.1ʼ⁵.1⁷ʼ¹⁰]-3-dodecene,
8-phenyloxycarbonyltetracyclo[4.4.0.1ʼ⁵.1⁷ʼ¹⁰]-3-dodecene,
8-methyl-8-methoxycarbonyltetracyclo[4.4.0.1ʼ⁵.1⁷ʼ¹⁰]-3-dodecene,
8-methyl-8-ethoxycarbonyltetracyclo[4.4.0.1ʼ⁵.1⁷ʼ¹⁰]-3-dodecene,
8-methyl-8-n-propoxycarbonyltetracyclo[4.4.0.1ʼ⁵.1⁷ʼ¹⁰]-3-dodecene,
8-methyl-8-isopropoxycarbonyltetracyclo[4.4.0.1ʼ⁵.1⁷ʼ¹⁰]-3-dodecene,
8-methyl-8-n-butoxycarbonyltetracyclo[4.4.0.1ʼ⁵.1⁷ʼ¹⁰]-3-dodecene,
8-methyl-8-sec-butoxycarbonyltetracyclo[4.4.0.1ʼ⁵.1⁷ʼ¹⁰]-3-dodecene,
8-methyl-8-t-butoxycarbonyltetracyclo[4.4.0.1ʼ⁵.1⁷ʼ¹⁰]-3-dodecene,
8-butoxycarbonyl-9-phenyltetracyclo[4.4.0.1ʼ⁵.1⁷ʼ¹⁰]-3-dodecene,
8,9-dimethoxycarbonyltetracyclo[4.4.0.1ʼ⁵.1⁷ʼ¹⁰]-3-dodecene,
88-cyclohexyloxycarbonyltetracyclo[4.4.0.1ʼ⁵.1⁷ʼ¹⁰]-3-dodecene,
8-(4'-t-butylcyclohexyloxy)carbonyltetracyclo-[4.4.0.1ʼ⁵.1⁷ʼ¹⁰]-3-dodecene,
8-methyl-8-cyclohexyloxycarbonyltetracyclo-[4.4.0.1ʼ⁵.1⁷ʼ¹⁰]-3-dodecene,
8-methyl-8-(4'-t-butylcyclohexyloxy)carbonyltetracyclo-[4.4.0.1ʼ⁵.1⁷ʼ¹⁰]-3-dodecene,
8-menthyloxycarbonyltetracyclo[4.4.0.1ʼ⁵.1⁷ʼ¹⁰]-3-dodecene,
8-methyl-8-menthyloxycarbonyltetracyclo[4,4.0,1ʼ⁵.1⁷ʼ¹⁰]-3-dodecene,
8-bornyloxycarbonyltetracyclo[4.4.0.1ʼ⁵.1⁷ʼ¹⁰]-3-dodecene,
8-methyl-8-bornyloxycarbonyl[4.4.0.1ʼ⁵.1⁷ʼ¹⁰]-3-dodecene,
8-isobornyloxycarbonyl[4.4.0.1ʼ⁵.1⁷ʼ¹⁰]-3-dodecene.
8-methyl-8-isobornyloxycarbonyl[4.4.0.1ʼ⁵.1⁷ʼ¹⁰]-3-dodecene,
8-adamanthyloxycarbonyl[4.4.0.1ʼ⁵.1⁷ʼ¹⁰]-3-dodecene,
8-methyl-8-adamanthyloxycarbonyl[4.4.0.1ʼ⁵.1⁷ʼ¹⁰]-3-dodecene,
8-bicyclo[2.2.1]-2-heptyloxycarbonyl[4.4,0.1ʼ⁵.1⁷ʼ¹⁰]-3-dodecene,
8-methyl-8-bicyclo[2.2.1]-2-heptyloxycarbonyl-[4,4.0.1ʼ⁵.1⁷ʼ¹⁰]-3-dodecene,
8-tetracyclo[4.4.0.1ʼ⁵.1⁷ʼ¹⁰]-3-dodecyloxycarbonyl-[4.4.0.1ʼ⁵.1⁷ʼ¹⁰]-3-dodecene,
8-methyl-8-tetracyclo[4.4.0.1ʼ⁵.1⁷ʼ¹⁰]-3-dodecyloxy-carbonyl[4.4.0.1ʼ⁵.1⁷ʼ¹⁰]-3-dodecene,
8-tricyclo[5.2.1.0ʼ⁶]-8-decyloxycarbonyl-[4.4.0.1ʼ⁵.1⁷ʼ¹⁰]-3-dodecene,
8-methyl-8-tricyclo[5.2.1.0ʼ⁶]-8-decyloxycarbonyl-[4.4.0.1ʼ⁵.1⁷ʼ¹⁰]-3-dodecene,
8-pentacyclo[6.5.1.1³ʼ⁶.0ʼ⁷.0⁹ʼ¹³]-4-pentadecyloxycarbonyl[4.4.0.1ʼ⁵.1⁷ʼ¹⁰]-3-dodecene.
8-methyl-8-pentacyclo[6.5.1.1³ʼ⁶.0ʼ⁷.0⁹ʼ¹³]-4-pentadecyloxycarbonyl[4.4.0.1ʼ⁵.1⁷ʼ¹⁰]-3-dodecene,
8-tricyclo[6.2.1.0ʼ⁷]-9-undecyloxycarbonyl-[4.4.0.1ʼ⁵.1⁷ʼ¹⁰]-3-dodecene,
8-methyl-8-tricyclo[6.2.1.0ʼ⁷]-9-undecyloxycarbonyl-[4.4.0.1ʼ⁵.1⁷ʼ¹⁰]-3-dodecene,
8-pentacyclo[6.6.1.1³ʼ⁶.0ʼ⁷.0⁹ʼ¹⁴]-4-hexadecyloxycarbonyl[4.4.0.1ʼ⁵.1⁷ʼ¹⁰]-3-dodecene,
8-methyl-8-pentacyclo[6.6.1.1³ʼ⁶.0ʼ⁷.0⁹ʼ¹⁴]-4-hexadecyloxycarbonyl[4.4.0.1ʼ⁵.1⁷ʼ¹⁰]-3-dodecene and
8-acetoxytetracyclo[4.4.0.1ʼ⁵.1⁷ʼ¹⁰]-3-dodecene.

Specific examples of the bicyclo[2.2.1]-2-heptene which is a compound of general formula (I) where m = 0 include the followings:
5-methoxycarbonylbicyclo[2.2.1]-2-heptene,
5-ethoxycarbonylbicyclo[2.2.1]-2-heptene,
5-n-propoxycarbonylbicyclo[2.2.1]-2-heptene,
5-isopropoxycarbonylbicyclo[2.2.1]-2-heptene,
5-n-butoxycarbonylbicyclo[2.2.1]-2-heptene,
5-isobutoxycarbonylbicyclo[2.2.1]-2-heptene,
5-sec-butoxycarbonylbicyclo[2.2.1]-2-heptene,
5-tert-butoxycarbonylbicyclo[2.2.1]-2-heptene,
5-phenyloxycarbonylbicyclo[2.2.1]-2-heptene,
5-methyl-5-methoxycarbonylbicyclo[2.2.1]-2-heptene,
5-butoxycarbonyl-6-phenylbicyclo[2.2.1]-2-heptene,
5,6-dimethoxycarbonylbicyclo[2.2.1]-2-heptene,
5-cyclohexyloxycarbonylbicyclo[2.2.1]-2-heptene,
5-(4'-tert-butylcyclohexyloxy)carbonylbicyclo[2.2.1]-2-heptene,
5-methyl-5-cyclohexyloxycarbonylbicyclo[2.2.1]-2-heptene,
5-methyl-5-(4'-tert-butylcyclohexyloxy)carbonylbicyclo-[2.2.1]-2-heptene,
5-menthyloxycarbonylbicyclo[2.2.1]-2-heptene,
5-methyl-5-menthyloxycarbonylbicyclo[2.2.1]-2-heptene,
5-bornyloxycarbonylbicyclo[2.2.1]-2-heptene,
5-methyl-5-bornyloxycarbonylbicyclo[2.2.1]-2-heptene,
5-isobornyloxycarbonylbicyclo[2.2.1]-2-heptene,
5-adamantyloxycarbonylbicyclo[2.2.1]-2-heptene,
5-methyl-5-adamantyloxycarbonylbicyclo[2.2.1]-2-heptene,
5-bicyclo[2,2,1]-2-heptyloxycarbonylbicyclo[2.2.1]-2-heptene,
5-methyl-5-bicyclo[2.2.1]-2-heptyloxycarbonylbicyclo-[2.2.1]-2-heptene,
5-tetracyclo[4.4.0.1ʼ⁵.1⁷ʼ¹⁰]-3-dodecyloxycarbonylbicyclo[2.2.1]-2-heptene,
5-methyl-5-tetracyclo[4.4.0.1ʼ⁵.1⁷ʼ¹⁰]-3-dodecyloxycarbonylbicyclo[2.2.1]-2-heptene,
5-tricyclo[5.2.1.0ʼ⁶]-8-decyloxycarbonylbicyclo-[2.2.1]-2-heptene,
5-methyl-5-tricyclo[5.2,1.0ʼ⁶]-8-decyloxycarbonylbicyclo[2.2.1]-2-heptene,
5-pentacyclo[6.5.1.1³ʼ⁶.0ʼ⁷.0⁹ʼ¹³]-4-pentadecyloxycarbonylbicyclo[2.2.1]-2-heptene,
5-methyl-5-pentacyclo[6.5.1.1³ʼ⁶.0ʼ⁷.0⁹ʼ¹³]-4-pentadecyloxycarbonylbicyclo[2.2.1]-2-heptene,
5-tricyclo[6.2.1.0ʼ⁷]-9-undecyloxycarbonylbicyclo-[2.2.1]-2-heptene,
5-methyl-5-tricyclo[6.2.1.0ʼ⁷]-9-undecyloxycarbonylbicyclo[2.2.1]-2-heptene,
5-pentacyclo[6.6.1.1³ʼ⁶.0ʼ⁷.0⁹ʼ¹⁴]-4-hexadecyloxycarbonylbicyclo[2.2.1]-2-heptene,
5-methyl-5-pentacyclo[6.6.1.1³ʼ⁶.0ʼ⁷.0⁹ʼ¹⁴]-4-hexadecyloxycarbonylbicyclo[2.2.1]-2-heptene and
5-acetoxybicyclo[2.2.1]-2-heptene.

In the compound of general formula (I), the polar substituent is a carboxylic acid ester group represented by -(CH₂)ₙCOOR¹ because the resulting polymer has a high glass transition temperature and low hygroscopicity.

The number of the carboxylic acid ester groups is one per one molecule of the tetracyclododecene derivative because the resulting polymer has low hygroscopicity.

The smaller the n value in the formula -(CH₂)ₙCOOR¹ for the carboxylic acid ester group, the higher the glass transition temperature of the resulting polymer, and ordinarily n = 0 is especially preferable because the monomer synthesis is easier, and the resulting polymer has good properties. In R¹, which is a C₁₋₂₀hydrocarbon group, a larger number of carbon atoms is preferred because the resulting polymer has lower hygroscopicity. In view of the balance of hygroscopicity and glass transition temperature of the polymer, a C₁₋₄ acyclic hydrocarbon group or a C₅₋₂₀(poly)cyclic hydrocarbon group is preferred.

In the compound of general formula (I), it is preferable that the carbon atom to which the carboxylic acid ester group is bonded has a C₁₋₁₀hydrocarbon group as another substituent because the resulting polymer has low hygroscopicity without lowering the glass transition temperature.

The (A) component in this invention is a hydrogenation product of a (co)polymer of at least one compound represented by general formula (I) or a hydrogenation product of a copolymer of said compound and other copolymerizable monomer. A good balance of heat resistance, moldability, water absorption, etc. can be obtained by copolymerizing said compound with other copolymerizable monomer. In the copolymerization, the proportion of the monomer of general formula (I) in the copolymer is at least 5 mole %, preferably at least 20 mole %. The copolymerizable monomer used in the copolymerization is a monomer which is ring-opening-polymerizable in the presence of a metathesis catalyst, or a polymer having carbon-to-carbon double bonds in the main chain.

Specific examples of the copolymerizable monomer include polar substituent-containing bicyclo-[2.2.1]-2-heptene derivatives represented by general formula (II): 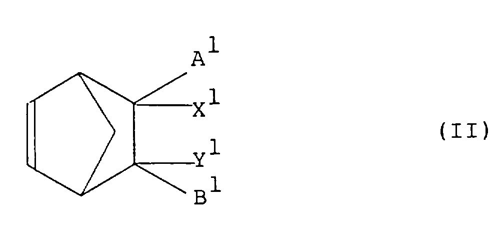 wherein A¹ and B¹ are independently hydrogen atoms or hydrocarbon groups of 1-10 carbon atoms, preferably 1-8 carbon atoms, more preferably 1-2 carbon atoms (it is preferable that one of A¹ and B¹ be H and the other be CH₃); X¹ and Y¹ are independently hydrogen atoms, C₁₋₁₀hydrocarbon groups, halogen atoms, halogen-substituted C₁₋₁₀hydrocarbon groups, -(CH₂)ₙCOOR¹, -(CH₂)ₙOCOR¹, -(CH₂)ₙOR¹, -(CH₂)ₙCN, -(CH₂)ₙCONRR³, -(CH₂)ₙCOOZ, -(CH₂)ₙOCOZ, -(CH₂)ₙOZ or -(CH₂)ₙW [R¹, R, R³ and R⁴ are independently C₁₋₂₀hydrocarbon groups, Z is a halogen-substituted hydrocarbon group, W is SiR⁵ₚD₃₋ₚ (R⁵ is a C₁₋₁₀hydrocarbon group, D is a halogen atom, -OCOR⁵ or -OR⁵, p is 0 or an integer of 1-3), n is 0 or an integer of 1-10] with the proviso that at least one of X¹ and Y¹ is selected from said groups other than the hydrogen atom and the hydrocarbon groups, or X¹ and Y¹ may form together

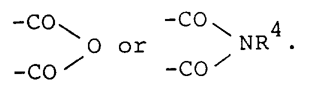

In general formula (II), the substituents A¹ and B¹ are preferably hydrocarbon groups in order to obtain lower water absorption. However, when the hydrocarbon group has too many carbon atoms, the heat resistance becomes inferior. Further, it is desirable to consider ease of monomer synthesis in the selection of the number of carbon atoms. Especially preferably, one of A¹ and B¹ is a methyl group and the other is a hydrogen atom in view of the balance of the ease of monomer synthesis and low water absorption.

The substituents X¹ and Y¹ are preferably selected from the group consisting of a hydrogen atom, a C₁₋₁₀hydrocarbon group, -(CH₂)ₙCOOR¹ and -(CH₂)ₙOCOR¹. More preferably, one of X¹ and Y¹ is selected from a hydrogen atom and a C₁₋₁₀hydrocarbon group and the other is selected from -(CH₂)ₙCOOR¹ and -(CH₂)ₙOCOR¹. Especially preferably, one is a hydrogen atom and the other is -COOR^{1'} or -OCOR^{1'} (R^{1'} is a C₁₋₄alkyl group or a C₅₋₁₀cyclic hydrocarbon group) because the resulting polymer has low water absorption without impairing the heat resistance.

Specific examples of the bicyclo[2.2.1]-2-heptene represented by general formula (II) include the followings:
5-methoxycarbonylbicyclo[2.2.1]-2-heptene,
5-ethoxycarbonylbicyclo[2.2.1]-2-heptene,
5-n-propoxycarbonylbicyclo[2.2.1]-2-heptene,
5-isopropoxycarbonylbicyclo[2.2.1]-2-heptene,
5-n-butoxycarbonylbicyclo[2.2.1]-2-heptene,
5-isobutoxycarbonylbicyclo[2.2.1]-2-heptene,
5-sec-butoxycarbonylbicyclo[2.2.1]-2-heptene,
5-tert-butoxycarbonylbicyclo[2.2.1]-2-heptene,
5-phenyloxycarbonylbicyclo[2.2.1]-2-heptene,
5-methyl-5-methoxycarbonylbicyclo[2.2.1]-2-heptene,
5-butoxycarbonyl-6-phenylbicyclo[2.2.1]-2-heptene,
5,6-dimethoxycarbonylbicyclo[2.2.1]-2-heptene,
5-cyclohexyloxycarbonylbicyclo[2.2.1]-2-heptene,
5-(4'-tert-butylcyclohexyloxy)carbonylbicyclo-[2.2.1]-2-heptene,
5-methyl-5-cyclohexyloxycarbonylbicyclo-[2.2.1]-2-heptene,
5-methyl-5-(4'-tert-butylcyclohexyloxy)carbonylbycyclo[2.2.1]-2-heptene,
5-menthyloxycarbonylbicyclo[2.2.1]-2-heptene,
5-methyl-5-menthyloxycarbonylbicyclo[2.2.1]-2-heptene,
5-bornyloxycarbonylbicyclo[2.2.1]-2-heptene,
5-methyl-5-bornyloxycarbonylbicyclo[2.2.1]-2-heptene,
5-isobornyloxycarbonylbicyclo[2.2.1]-2-heptene,
5-adamantyloxycarbonylbicyclo[2.2.1]-2-heptene,
5-methyl-5-adamantyloxycarbonylbicyclo[2.2.1]-2-heptene,
5-bicyclo[2.2.1]-2-heptyloxycarbonylbicyclo-[2.2.1]-2-heptene,
5-methyl-5-bicyclo[2.2.1]-2-heptyloxycarbonylbicyclo[2.2.1]-2-heptene,
5-tetracyclo[4.4.0.1ʼ⁵.1⁷ʼ¹⁰]-3-dodecyloxycarbonylbicyclo[2.2.1]-2-heptene,
5-methyl-5-tetracyclo[4.4.0.1ʼ⁵.1⁷ʼ¹⁰]-3-dodecyloxycarbonylbicyclo[2.2.1]-2-heptene,
5-tricyclo[5.2.1.0ʼ⁶]-8-decyloxycarbonylbicyclo[2.2.1]-2-heptene,
5-methyl-5-tricyclo[5.2.1.0ʼ⁶]-8-decyloxycarbonylbicyclo[2.2.1]-2-heptene,
5-pentacyclo[6.5.1.1³ʼ⁶.0ʼ⁷.0⁹ʼ¹³]-4-pentadecyloxycarbonylbicyclo[2.2.1]-2-heptene,
5-methyl-5-pentacyclo[6.5.1.1³ʼ⁶.0ʼ⁷.0⁹ʼ¹³]-4-pentadecyloxycarbonylbicyclo[2.2.1]-2-heptene,
5-tricyclo[6.2.1.0ʼ⁷]-9-undecyloxycarbonylbicyclo[2.2.1]-2-heptene,
5-methyl-5-tricyclo[6.2.1.0ʼ⁷]-9-undecyloxycarbonylbicyclo[2.2.1]-2-heptene,
5-pentacyclo[6.6.1.1³ʼ⁶.0ʼ⁷.0⁹ʼ¹⁴]-4-hexadecyloxycarbonylbicyclo[2.2.1]-2-heptene,
5-methyl-5-pentacyclo[6.6.1.1³ʼ⁶.0ʼ⁷.0⁹ʼ¹⁴]-4-hexadecyloxycarbonylbicyclo[2.2.1]-2-heptene,
5-acetoxybicyclo[2.2.1]-2-heptene,
5-cyanobicyclo[2.2.1]-2-heptene,
6-methyl-5-cyanobicyclo[2.2.1]-2-heptene,
5-methyl-5-cyanobicyclo[2.2.1]-2-heptene,
5,6-dimethyl-5,6-dicyanobicyclo[2.2.1]-2-heptene,
5-carbamoylbicyclo[2.2.1]-2-heptene,
5-N-methylcarbamoylbicyclo[2.2.1]-2-heptene,
5-N,N-diethylcarbamoylbicyclo[2.2.1]-2-heptene,
N,N,N',N'-tetramethyl-5,6-dicarbamoylbicyclo-[2.2.1]-2-heptene,
5-chlorobicyclo[2.2.1]-2-heptene,
5-methyl-5-chlorobicyclo[2.2.1]-2-heptene,
5-chloromethyloxycarbonylbicyclo[2.2.1]-2-heptene,
5-dibromopropyloxycarbonylbicyclo[2.2.1]-2-heptene,
5-dichloropropyloxycarbonylbicyclo[2.2.1]-2-heptene,
5-chlorophenyloxycarbonylbicyclo[2.2.1]-2-heptene,
5-monobromophenyloxycarbonylbicyclo[2.2.1]-2-heptene,
5-tribromophenyloxycarbonylbicyclo[2.2.1]-2-heptene,
5,6-dichlorobicyclo[2.2.1]-2-heptene,
5-bromomethylbicyclo[2.2.1]-2-heptene,
5-bromoethylbicyclo[2.2.1]-2-heptene,
5-tribromobenzyloxycarbonylbicyclo[2.2.1]-2-heptene,
bicyclo[2.2.1]-2-heptene-5,6-dicarboxylic anhydride,
5,6-dimethylbicyclo[2.2.1]-2-heptene-5,6-dicarboxylic anhydride,
bicyclo[2.2.1]-2-heptene-5,6-dicarboxylic acid imide,
N-phenyl-5-methylbicyclo[2.2.1]-2-heptenedicarboxylic acid imide,
5-trichlorosilylbicyclo[2.2.1]-2-heptene,
5-(dimethylmethoxysilyl)bicyclo[2.2.1]-2-heptene,
5-(dimethylacetylsilyl)bicyclo[2.2.1]-2-heptene, and
5-trimethylsilylbicyclo[2.2.1]-2-heptene.

The proportions of the compound represented by general formula (I) and the compound represented by general formula (II) in the copolymer can vary depending upon the glass transition temperatures and water absorptions of the respective homopolymers, but are preferably (I)/(II) = 95/5 - 5/95 (by weight), more preferably (I)/(II) = 90/10 - 10/90 (by weight).

The tetraccylododecene derivative of general formula (I) where m=1 can be ring-opening-copolymerized with a cyclic olefin compound to form a copolymer. Specific examples of such a cyclic olefin include cycloolefins such as cyclopentene, cyclooctene, 1,5-cyclooctadiene, 1,5,9-cyclododecatriene and the like; and polycycloalkenes such as bicycle[2.2.1]-2-heptene, tricyclo [5.2,1.0ʼ⁶]-8-decene, tricyclo[5.2.1.0ʼ⁶]-3-decene, tricyclo[6.2.1.0¹ʼ⁸]-9-undecene, tricyclo-[6.2.1.0¹ʼ⁸]-4-undecene, tetracyclo[4.4.0.1ʼ⁵.1⁷ʼ¹⁰]-3-dodecene, pentacyclo[6.5.1.1³ʼ⁶.0ʼ⁷.0⁹ʼ¹³]-4-pentadecene, pentacyclo[6.6.1.1³ʼ⁶.0ʼ⁷.0⁹ʼ¹⁴]-4-hexadecene, pentacyclo[6.5.1.1³ʼ⁶.0ʼ⁷.0⁹ʼ¹³]-11-pentadecene and the like.

The above polycycloalkenes are useful for obtaining a copolymer having low hygroscopicity and a controlled glass transistion temperature. Hence, when the homopolymer of the tetradodecene derivative or a copolymer of the tetradodecene derivative with a bicycloheptene has a high glass transition temperature which is close to or above the thermal decomposition temperature, the tetracyclododecene derivative can be copolymerized with a cycloolefin to lower the glass transition temperature of the copolymer to a temperature at which molding can be easily effected actually.

When the obtained polymer has a glass transition temperature as low as not more than 100°C, it is possible to reduce the hygroscopicity and elevate the glass transition temperature by copolymerizing the tetracyclododecene derivative with a polycycloalkene.

The compound represented by general formula (I) can also be copolymerized with an unsaturated hydrocarbon type rubbery polymer having carbon-to-carbon double bonds in the main chain in order to obtain a copolymer of improved strength, particularly improved impact resistance. In this case, it is preferable that the difference in refractive index between the rubbery polymer and the polymer obtained from the compound of general formula (I) be as small as possible in order for the resulting copolymer to have transparency. The rubbery polymer includes a polybutadiene, a polyisoprene, an ethylene-propylene-non-conjugated diene copolymer rubber, a polynorbornene, a polypentenamer, etc. In order for the above two polymers to have substantially the same refractive index, there are preferably used, as the rubbery polymer, a styrene-butadiene copolymer, a styrene-butadiene block copolymer and its hydrogenation product, a styrene-isoprene block copolymer, etc. In order for the polymer of the compound of general formula (I) to have a refractive index substantially identical with that of the rubbery polymer, it is possible to also copolymerize it with a compound of general formula (II).

The thus produced (co)polymer preferably has a saturated water absorption of 1.8% or less and a glass transition temperature of at least 100°C. The saturated water absorption is more preferably 1.2% or less, most preferably 0.8% or less. The glass transition temperature is more preferably at least 120°C.

The metathesis catalyst used in producing a ring opening (co)polymer ordinarily consists of a combination of:
(a) at least one member selected from the group consisting of compounds of W, Mo and Re, and
(b) at least one member selected from the group consisting of compounds of elements of the Ia, IIa, IIb, IIIa, IVa and IVb Groups of the Deming Periodic Table, having at least one element-to-carbon bond or at least one element-to-hydrogen bond.

The metathesis catalyst may further contain an additive for enhancing the catalyst activity.

W, Mo and Re compounds suitable as the (a) component are halides, oxyhalides, alkoxyhalides, alkoxides, carboxylates, (oxy)acetylacetonates, carbonyl complexes, acetonitrile complexes and hydride complexes of W, Mo and Re, their derivatives, and their combinations. Of these, preferred are compounds of W and Mo, and particularly preferred are halides, oxyhalides and alkoxyhalides of W and Mo from the standpoint of their polymerization activity and practical use. Each of the W, Mo and Re compounds may be a mixture of two or more compounds which can form the above W, Mo or Re compound upon reaction with each other. Also, the W, Mo or Re compound may be complexed with an appropriate complexing agent such as P(C₆H₅)₅, C₅H₅N or the like.

Specific examples of the (a) component are WCl₆, WCl₅, WCl₄, WBr₆, WF₆, WI₆, MoCl₅, MoCl₄, MoCl₃, ReCl₃, WOCl₄, MoOCl₃, ReOCl₃, ReOBr₃, W(OC₆H₅)₆, WCl₂(OC₆H₅)₄, Mo(OC₂H₅)₂Cl₃, Mo(OC₂H₅), MoO₂(acac)₂, W(OC₂H₅)₂Cl₃, W(OCOR)₅, W(CO)₆, Mo(CO)₆, Re₂(CO)₁₀, ReOBr₃·P(C₆H₅)₃, WCl₅·P(C₆H₅), WCl₆·C₅H₅N, W(CO)₅·P(C₆H₅)₃, W(CO)₃·(CH₃CN)₃. Of these, MoCl₅, Mo(OC₂H₅)₂Cl₃, WCl₆ and W(OC₂H₅)₂Cl₃ are especially preferred.

Compounds suitable as the (b) component are compounds of elements of the Ia, IIa, IIb, IIIa, IVa and IVb Groups of the Deming Periodic Table, having at least one element-to-carbon bond or at least one element-to-hydrogen bond, or hydrides of the elements. Specific examples of the (b) component include n-C₄H₅Li, n-C₅H₁₁Na, C₅H₅Na, CH₃MgI, C₃H₅MgBr, CH₃MgBr, n-C₃H₇MgCl, (C₆H₅)₃Al, t-C₄H₉MgCl, CH₂=CHCH₂MgCl, (C₂H₅)₂Zn, (C₂H₅)₂Cd, CaZn(C₂H₅)₄, (CH₃)₃B, (C₂H₅)₃B, (n-C₄H₉)₃B, (CH₃)₃Al, (CH₃)₂AlCl, (CH₃)₃Al₂Cl₃, CH₃AlCl₂, (C₂H₅)₃Al, LiAl(C₂H₅)₂, (C₂H₅)₃Al-O(C₂H₅)₂, (C₂H₅)₂AlCl, C₂H₅AlCl₂, (C₂H₅)₂AlH, (iso-C₄H₉)₂AlH, (C₂H₅)₂AlOC₂H₅, (iso-C₄H₉)₃Al, (C₂H₅)₃Al₂Cl₃, (CH₃)₄Ga, (CH₃)₄Sn, (n-C₄H₉)₄Sn, (C₂H₅)₃SiH, (n-C₆H₁₃)₃Al, (n-C₈H₁₇)₃Al, LiH, NaH, B₂H₆, NaBH₄, AlH₃, LiAlH₄, and TiH₄. A mixture of two or more compounds which can form one of the above compounds upon reaction with each other may be used as an alternative.

Particularly preferred are (CH₃)₃Al, (CH₃)₂AlCl, (CH₃)₃Al₂Cl₃, CH₃AlCl₂, (C₂H₅)₃Al, (C₂H₅)₂AlCl, (C₂H₅)_{1.5}AlCl_{1.5}, C₂H₅AlCl₂, (C₂H₅)₂AlH, (C₂H₅)₂AlOC₂H₅, (C₂H₅)₂AlCN, (C₃H₇)₃Al, (iso-C₄H₉)₃Al, (iso-C₄H₉)₂AlH, (C₆H₁₃)₃Al, (C₈H₁₇)₃Al and (C₆H₅)₅Al.

The proportions of the (a) component and the (b) component are (a):(b) = 1:1 - 1:20, preferably (a):(b) = 1:2 - 1:10 in terms of metallic atom ratio.

The catalyst prepared from the (a) and (b) components ordinarily exhibits a high activity in the polymerization reaction for obtaining a transparent resin. If necessary, the catalyst can further contain a component (c) (an activating agent) as mentioned below to obtain a higher activity.

Various compounds can be used as the (c) component. Especially preferable compounds include the followings:
(1) simple boron; non-organometal compounds of boron such as BF₃, BCl₃, B(O-n-C₄H₉)₃, (C₂H₅O₃)₂, BF, B₂O₃, H₃BO₃ and the like; and non-organometal compounds of Si such as Si(OC₂H₅)₄ and the like,
(2) alcohols, hydropeoroxides and peroxides,
(3) water,
(4) oxygen,
(5) carbonyl compounds such as aldehyde, ketone and the like; and their polymers,
(6) cyclic ethers such as ethylene oxide, epichlorohydrin, oxetane and the like,
(7) amides such as N,N-diethylformamide, N,N-dimethylacetamide and the like; amines such as aniline, morpholine, piperidine and the like; and azo compounds such as azobenzene and the like,
(8) N-nitroso compounds such as N-nitrosodimethylamine, N-nitrosodiphenylamine and the like, and
(9) compounds containing a S-Cl or N-Cl group such as trichloromelamine, N-chlorosuccinoimide, phenylsulphenyl chloride and the like.

When the (c) component is used, the proportions of the (a) and (b) components greatly vary depending upon the type of the (c) component and cannot be determined by a specific rule. The (c) component is used in many cases at a (c)/(a) molar ratio of 0.005-10, preferably 0.05-1.0.

The molecular weight of the ring opening (co)polymer obtained can be controlled by changing reaction conditions such as type and concentration of catalyst, polymerization temperature, type and concentration of solvent and concentration of monomer. Preferably, the molecular weight is controlled by adding to the reaction system an appropriate amount of a compound having at least one carbon-to-carbon double bond or at least one carbon-to-carbon triple bond within the molecule, such as α-olefin, α,ω-diolefin, acetylene or the like, or an appropriate amount of a polar allyl compound such as allyl chloride, allyl acetate, trimethylallyloxysilane or the like.

The molecular weight of the ring opening (co)polymer is preferably 10,000-3,000,000 in terms of polystyrene-reduced weight-average molecular weight. It is more preferably 30,000-1,000,000 for obtaining a high glass transition temperature and good moldability and especially preferably 50,000-900,000 for obtaining a proper balance of moldability and strength.

The solvent used in the polymerization reaction includes, for example, alkanes such as pentane, hexane, heptane, octane, nonane, decane and the like; cycloalkanes such as cyclohexane, cycloheptane, cyclooctane, decalin, norbornane and the like; aromatic compounds such as benzene, toluene, xylene, ethylbenzene, cumene and the like; halogenated alkanes and halogenated aryl compounds such as methylene chloride, bromohexane, dichloroethane, hexamethylene dibromide, chlorobenzene and the like; saturated carboxylic acid esters such as ethyl acetate, methyl propionate and the like; and ethers.

The hydrogenation reaction of the (co)polymer obtained by the metathesis ring opening polymerization can be effected according to a conventional method. The catalyst used in this hydrogenation reaction may be a catalyst which is used in the conventional hydrogenation reaction of olefinic compound.

The heterogeneous catalyst includes, for example, solid catalysts in which a catalyst substance such as palladium, platinum, nickel, rhodium, ruthenium or the like is supported on a carrier such as carbon, silica, alumina, titania or the like.

The homogeneous catalyst includes, for example, nickel naphthenate/triethylaluminum; nickel acetylacetonate/ triethylaluminum; cobalt octenoate/n-butyllithium; titanocene dichloride/diethylaluminum monochloride; and rhodium catalysts such as rhodium acetate, chlorotris-(triphenylphosphine)rhodium and the like.

The hydrogenation reaction can be effected at 0-180°C, preferably 20-150°C in a hydrogen gas atmosphere at atmospheric pressure-300 atm., preferably 3-150 atm.

The hydrogenated (co)polymer has excellent heat stability and accordingly its characteristics are not deteriorated even when it is heated during molding or during use as a product.

The hydrogen degree is at least 95% and preferably at least 99%.

In the step of hydrogenation of the (co)polymer obtained by subjecting at least one monomer represented by general formula (I) or this monomer and other copolymerizable monomer to ring opening polymerization, it is preferable to effect the hydrogenation in substantially the same organic solvent as used in the ring opening polymerization step.

As such an organic solvent, there is used at least one compound selected from saturated carboxylic acid esters, saturated alicyclic hydrocarbon compounds and ether compounds. The solvent is preferably at least one compound selected from the alkyl esters of saturated carboxylic acids wherein the sum total of the carbon atoms of the alkyl group due to the saturated carboxylic acid and those of the alkyl group due to the alcohol is 5-10, C₅₋₁₀ saturated alicyclic hydrocarbon compounds, C₄₋₁₀acyclic monoether compounds, C₄₋₁₀acyclic diether compounds and C₄₋₁₀compounds having an ether bond and a carboxylic acid ester group in the molecule.

The saturated carboxylic acid esters used as an organic solvent in this invention are represented by the general formula, R^{a}-COOR^{b} where R^{a} is a hydrogen atom or a C₁₋₂alkyl group and R^{b} is an alkyl group having 1-10 carbon atoms, preferably 1-6 carbon atoms, more preferably 1-4 carbon atoms.

Specific examples of the saturated carboxylic acid esters include, for example, formic acid esters such as methyl formate, ethyl formate, n-propyl formate, isoporpyl formate, n-butyl formate, 1-methylpropyl formate, 2-methylpropyl formate, tert-butyl formate, n-pentyl formate, 1-methylbutyl formate, 2-methylbutyl formate, 3-methylbutyl formate, 1,1-dimethylpropyl formate, 1,2-dimethylpropyl formate, 2,2-dimethylpropyl formate, n-hexyl formate, 1-methylpentyl formate, 2-methylpentyl formate, 3-methylpentyl formate, 4-methylpentyl formate, 1,1-dimethylbutyl formate, 2,2-dimethylbutyl formate, 3,3-dimethylbutyl formate, 1,2-dimethylbutyl formate, 1,3-dimethylbutyl formate, 2,3-dimethylbutyl formate, n-heptyl formate, cyclohexyl formate, n-octyl formate, 2-ethylhexyl formate and the like; acetic acid esters such as methyl acetate, ethyl acetate, n-propyl acetate, isopropyl acetate, n-butyl acetate, 1-methylpropyl acetate, 2-methylpropyl acetate, tert-butyl acetate, n-pentyl acetate, 1-methylbutyl acetate, 2-methylbutyl acetate, 3-methylbutyl acetate, 1,1-dimethylpropyl acetate, 1,2-dimethylpropyl acetate, 2,2-dimethylpropyl acetate, n-hexyl acetate, 1-methylpentyl acetate, 2-methylpentyl acetate, 3-methylpentyl acetate, 4-methylpentyl acetate, 1,1-dimethylbutyl acetate, 2,2-dimethylbutyl acetate, 3,3-dimethylbutyl acetate, 1,2-dimethylbutyl acetate, 1,3-dimethylbutyl acetate, 2,3-dimethylbutyl acetate, cyclohexyl acetate, n-heptyl acetate, n-octyl acetate, 2-ethylhexyl acetate and the like; and propionic acid esters such as ethyl propionate, methyl propionate, n-propyl propionate, isopropyl propionate, n-butyl propionate, 1-methylpropyl propionate, 2-methylpropyl propionate, tert-butyl propionate, n-pentyl propionate, 1-methylbutyl propionate, 2-methylbutyl propionate, 3-methylbutyl propionate, 1,1-dimethylpropyl propionate, 1,2-dimethypropyl propionate, 2,2-dimethylpropyl propionate, n-hexyl propionate, cyclohexyl propionate, n-heptyl propionate, n-octyl propionate, 2-ethylhexyl propionate and the like.

The saturated alicyclic hydrocarbon compounds used as an organic solvent in this invention have a cyclic skeletal structure of 10 or less carbon atoms, preferably 5-8 carbon atoms and may be substituted with an alkyl group. Specific examples of the saturated alicyclic hydrocarbon compounds include, for example, cyclopentane, methylcyclopentane, cyclohexane, methylcyclohexane, dimethylcyclohexane, ethylcyclohexane, cycloheptane, decalin and the like.

The ether compounds are preferably C₄₋₁₀acyclic monoether compounds and acyclic diether compounds. Specific examples of the ether compounds include di-n-propyl ether, di-isopropyl ether, di-n-butyl ether, di-isobutyl ether, di-tert-butyl ether, dipentyl ether, 1,2-dimethoxyethane, 1,2-diethoxyethane, 1,2-methoxyethoxyethane, 1,2-dipropoxyethane, 1,2-dibutoxyethane, 2-methoxyethyl acetate, 2-ethoxyethyl acetate, 2-propoxyethyl acetate, 2-butoxyethyl acetate, 3-methoxypropyl acetate and 3-ethoxypropyl acetate.

Of these, preferred are n-butyl acetate, cyclohexane, dibutyl ether, 1,2-dimethoxyethane, 1,2-diethoxyethane, methoxyethyl acetate and ethoxyethyl acetate, and n-butyl acetate is the most preferable, from the standpoints of solvency over a wide temperature range and ease of recovery.

The above saturated carboxylic acid esters, saturated alicyclic hydrocarbon compounds and ether compounds do not deteriorate the activities of the metathesis polymerization catalyst and hydrogenation catalyst used and moreover have a high solvency for both the ring opening (co)polymer produced by a metathesis ring opening reaction and the hydrogenated product of the (co)polymer. Therefore, the molecular weight control of the desired hydrogenated (co)polymer is easy; a hydrogenated (co)polymer can be produced in a high yield; and the hydrogenation reaction can give a high hydrogenation degree. Further, since said solvents themselves do not undergo hydrogenation, reduction with hydrogen and hydrocracking, there is no unnecessary consumption of hydrogen and the solvents can be used repeatedly, which is advantageous economically.

In the production of the (A) component in this invention, one common specific organic solvent is used in both the ring opening (co)polymerization step and the hydrogenation step. Therefore, these two steps can be effected continuously without separating the ring opening (co)polymer after the ring opening polymerization reaction. Further, in the present invention, the molecular weight control of the polymer produced is easy and both the catalyst and the organic solvent can be reused. Accordingly, a desired hydrogenated (co)polymer can be produced very easily at a high efficiency.

Catalyst removal is effected preferably by contacting the hydrogenated (co)polymer solution with an aqueous solution of an organic acid. This catalyst-removal method enables the efficient removal of not only the metals of a ring opening polymerization catalyst consisting of a main catalyst represented by a tungsten compound and an organometal compound having a reducing power, a representative of which is an organoaluminum compound, but also the halogen atoms bonded to said metal atoms, and can produce a hydrogenated (co)polymer containing very small amounts of residual metals and halogens (these residual metals and halogens cause the deterioration and coloring of a hydrogenated (co)polymer containing them).

The organic acid compound includes, for example, aliphatic monocarboxylic acids such as formic acid, acetic acid, monochloroacetic acid, dichloroacetic acid, trichloroacetic acid, propionic acid, acrylic acid, itaconic acid and the like; aliphatic dicarboxylic acids such as oxalic acid, malonic acid, adipic acid, azelaic acid, maleic acid, fumaric acid and the like; aliphatic polycarboxylic acids such as propanetricarboxylic acid, butanetetracarboxylic acid and the like; oxyacids such as citric acid, tartaric acid and the like; alicyclic mono-, di- and poly-carboxylic acids such as cyclopentanecarboxylic acid, cyclopentanedicarboxylic acid, cyclopentanetricarboxylic acid, cyclopentanetetracarboxylic acid, cyclohexanecarboxylic acid, cyclohexanedicarboxylic acid, cyclohexanetricarboxylic acid, cyclohexanetetracarboxylic acid, Himic acid and the like; aromatic mono-, di- and poly-carboxylic acids such as benzoic acid, phthalic acid, isophthalic acid, terephthalic acid, trimellitic acid, pyromellitic acid and the like; and phenols such as phenol, cresol, xylenol and the like. Of these, organic acids having 1 to 6 carbon atoms are preferred because they are less soluble in the formed polymer and hence hardly remain therein. Among these organic acids, acetic acid and oxalic acid are especially preferred because they are excellent in removal efficiency of catalyst metals and also removal efficiency of halogens which are a constructive element for catalyst (chlorine in particular) and do not remain in the polymer after the decatalyst treatment and can be separated from the polymer.

The organic acid compound is usually used in the form of a 0.05-15% by weight aqueous solution, preferably a 0.1-10% by weight aqueous solution, especially preferably a 0.5-8% by weight aqueous solution.

When the concentration of the organic acid compound in the aqueous solution is less than 0.05%, the removal efficiency of the residual catalyst metals and halogens is low and the recovered polymer contains large amounts of them which cause coloration of the polymer. When the concentration of the organic acid compound is more than 15%, the effect of the organic acid compound is already at a saturation point, and even the polymer recovered after the neutralization of the organic acid compound to remove the same contains a certain amount of the organic acid compound. This organic acid compound causes the coloring of the polymer under the high temperature conditions used during the molding of the polymer, and the organic acid bleeds to the surface of the resulting molded article to impair the appearance of the article. When the organic acid concentration is in a range of 0.05-15%, it has a stable residual catalyst removal effect, and the resulting polymer is hardly colored owing to residual catalyst metal and contains substantially no organic acid.

In general, the proportion between the hydrogenated ring opening (co)polymer solution and the aqueous organic acid solution is preferably 5-500 parts by weight, more preferably 10-300 parts by weight, especially preferably 20-200 parts by weight of the aqueous organic acid solution per 100 parts by weight of the hydrogenated (co)polymer solution having a polymer concentration of 1-30% by weight.

The method of contacting the hydrogenated (co)polymer solution with the aqueous organic acid solution can usually be carried out using a conventional mechanical stirrer, a static mixer, a line mixer, a homomixer, etc. Needless to say, the use of a stirrer having a higher stirring efficiency is superior in efficiency of removal of the residual metals in the hydrogenated (co)polymer solution. The contact time and temperature may be varied depending upon the efficiency of stirring, and the contact time is ordinarily 1 minute to 3 hours. The lower limit of the contact temperature is the freezing point of water and the upper limit is the boiling point of the solvent of the hydrogenated (co)polymer solution or the boiling point of water (lower point of the two). The preferable contact temperature range is 5-60°C.

After the hydrogenated (co)polymer solution has been contacted with the aqueous organic acid solution to remove, by extraction, the catalyst metals from the hydrogenated (co)polymer solution, the organic layer is, if necessary, neutralized, washed with water and subjected to a conventional polymer recovery step to isolate a hydrogenated polymer freed of the polymerization catalyst.

In recovering a hydrogenation product of a ring opening (co)polymer of at least one monomer represented by general formula (I) or a ring opening copolymer of said monomer and other copolymerizable monomer from its solution, it is preferable that a solution of the hydrogenation produt to be recovered be mixed with a mixed solvent consisting of 5-50 parts by volume of a good solvent (good to the hydrogenated (co)polymer) and 95-50 parts by volume of a poor solvent (the two solvents must be miscible with each other) so that the volume ratio of the hydrogenation product solution to the mixed solvent becomes 1:90 - 30:70, whereby the hydrogenation product be coagulated and then recovered.

The hydrogenation product solution to which the above-mentioned recovery process is applied is a solution containing a hydrogenation product of a (co)polymer produced from the above-mentioned cyclic monomer of general formula (I). Specific examples of the hydrogenation product solution include (1) a hydrogenated (co)polymer solution obtained by subjecting to hydrogenation reaction, the (co)polymer solution obtained after completion of the ring-opening (co)polymerization reaction of said monomer, (2) a solution obtained by subjecting the hydrogenated (co)polymer solution (1) to a decatalyst treatment and (3) a hydrogenated (co)polymer solution obtained by dissolving in an appropriate solvent a hydrogenated (co)polymer recovered by, for example, subjecting the solution (2) to ordinary recovery method such as steam stripping or coagulation from poor solvent.

In the recovery process in this invention, it is preferable that a hydrogenation product solution as mentioned above and a mixed solvent consisting of specific proportions of a good solvent for the objective hydrogenated (co)polymer and a poor solvent for the objective hydrogenated (co)polymer be mixed at a specific ratio, whereby the objective hydrogenated (co)polymer is coagulated, separated and recovered.

In this invention, the good solvent for the objective hydrogenated (co)polymer refers to such a solvent that the maximum solubility of the hydrogenated (co)polymer in the solvent at a temperature as employed in the recovery treatment is at least 5% by weight, and the poor solvent refers to such a solvent that the maximum solubility of the hydrogenated (co)polymer in the solvent at the same temperature is less than 5% by weight.

In the above-mentioned recovery process, the good solvent includes, for example, aromatic hydrocarbon compounds such as benzene, toluene, xylene, ethylbenzene, cumene, butylbenzene, tetralin, p-cymene, cyclohexylbenzene, diethylbenzene and the like; alicyclic hydrocarbon compounds such as cyclopentane, methylcyclopentane, cyclohexane, methylcyclohexane and the like; halogenated hydrocarbon compounds such as methylene chloride, chloroform, carbon tetrachloride, 1,1-dichloroethane, 1,2-dichloroethane, 1,1,1-trichloroethane, 1,1,2-trichloroethane, 1,1,1,2-tetrachloroethane, 1,1,2,2-tetrachloroethane, pentachloroethane, hexachloroethane, 1,2-dichloropropane, 1,2,3-trichloropropane, bromoform, 1,2-bromoethane, 1,1,2,2-tetrabromoethane, chlorobenzene, dichlorobenzene, bromobenzene, dibromobenzene and the like; esters of aliphatic carboxylic acids of 2 or more carbon atoms with alcohols of 3 or more carbon atoms such as butyl acetate, propyl acetate, pentyl acetate, hexyl acetate, cyclohexyl acetate, methyl propionate, ethyl propionate, butyl propionate, pentyl propionate, hexyl propionate and the like; cyclic ether compounds such as tetrahydrofuran, dioxane, tetrahydropyran, cineole and the like; and their mixtures. Of these, the aromatic hydrocarbon compounds, the cyclic ether compounds and the carboxylic acid esters are preferably used as the good solvent.

The poor solvent includes, for example, aliphatic hydrocarbon compounds such as hexane, butane, octane, nonane, decane, undecane, dodecane and the like; esters of a lower carboxylic acid of 3 or less carbon atoms with an alcohol of 2 or less carbon atoms, such as methyl formate, ethyl formate, methyl acetate, ethyl acetate and the like; lower alkyl ketones such as acetone, methyl ethyl ketone and the like; lower alcohols such as methanol, ethanol, propanol, butanol, pentanol, hexanol and the like; and their mixtures. Of these, the lower alkyl ketones and the lower alcohols are preferably used as the poor solvent.

With respect to the mixed solvent used in this invention, specific examples of a preferable combination of a good solvent and a poor solvent are combinations of a good solvent selected from aromatic hydrocarbon compounds (e.g. toluene, xylene and the like), cyclic ether compounds (e.g. tetrahydrofuran, dioxane and the like) and carboxylic acid esters (e.g. n-butyl acetate, isobutyl acetate and the like) with a poor solvent selected from the lower alcohols, for example, methanol, ethanol, propanol and the like.

Of these combinations, especially preferable are combinations of toluene, xylene, tetrahydrofuran or n-butyl acetate as a good solvent with methanol as a poor solvent because such mixed solvents enable the recovery of a hydrogenated (co)polymer containing small amounts of low-molecular weight polymers (the low-molecular weight polymers refer to polymers having a polystyrene-reduced molecular weight of, for example, 3000 or less) and are easy to recover, thus providing an economical advantage. In this invention, the solvent used in the hydrogenated (co)polymer solution can be the same as the good solvent. This matter is preferable because the solvent recovery and refining step can be simple.

The volume ratio of the good solvent to the poor solvent is preferably 5:95 - 50:50, especially preferably 20:80 - 40:60. When the two solvents are in these ranges, hydrogenated (co)polymer recovery is easy and the recovery (%) is high. The recovered hydrogenated (co)polymer contains small amounts of the unreacted monomer(s) and low-molecular weight polymers.

In the recovery process in this invention, the volume ratio of the hydrogenated (co)polymer solution to the mixed solvent is preferably 1:99 - 30:70, especially preferably 5:95 - 15:85.

By mixing the hydrogenated (co)polymer solution with the mixed solvent, the hydrogenated (co)polymer is coagulated. This hydrogenated (co)polymer is separated from the liquid phase and recovered according to a conventional means such as filtration, centrifugation or the like. At the time of this separation, the hydrogenated (co)polymer may be ground by use of an apparatus such as a crusher or the like.

The thus recovered hydrogenated (co)polymer can be subjected to post-treatment if necessary. For example, by contacting the hydrogenated (co)polymer with a poor solvent, the unreacted monomers and low-molecualr weight polymers or their hydrogenation products remaining in the hydrogenated (co)polymer can be extracted and removed. As such a poor solvent, the poor solvents mentioned as one component of the mixed solvent can be used though lower alcohols are preferable and methyl alcohol is the most preferable mainly because it causes no coagulation of the hydrogenated (co)polymer during the extraction step. The contact with the poor solvent is effected at a temperature ranging from room temperature to 150°C, preferably from room temperature to 120°C, for a period of ordinarily 5 minutes to 50 hours, preferably 20 minutes to 30 hours, more preferably 30 minutes to 15 hours.

In carrying out the process for producing the hydrogenated (co)polymer of this invention, it is possible to add, to the mixed system of the mixed solvent and the (co)polymer solution, additives such as catalyst-removing agent, antioxidant, ultraviolet absorber and the like to obtain a hydrogenated (co)polymer having effects of such additives.

### (B) Component

The (B) component is selected from (B-1) a rubbery polymer and (B-2) a thermoplastic resin.

The rubbery polymer (B-1) includes (B-1') an ordinary rubbery polymer and (B-1˝) a thermoplastic elastomer.

The thermoplastic resin (B-2) includes a rubber-reinforced thermopalstic resin (B-2') and other thermoplastic resins (B-2").

When the (A) component is mixed with the rubbery polymer (B-1), an impact-resistant polymer composition can be obtained. This rubbery polymer (B-1) includes (B-1') an ordinary rubbery polymer, which requires vulcanization prior to use and (B-1") a thermoplastic elastomer which does not require vulcanization.

The ordinary rubbery polymer (B-1') includes, for example, ethylene-α-olefin copolymers such as ethylene-propylene random or block copolymer, ethylene-butylene random or block copolymer and the like; ethylene-unsaturated carboxylic acid ester copolymers such as ethylene-methyl methacrylate copolymer, ethylene-butyl acrylate copolymer, and the like; copolymers of ethylene and an ester of vinyl alcohol with a fatty acid, such as ethylene-vinyl acetate copolymer and the like; polymers of an alkyl acrylate such as ethyl acrylate, butyl acrylate, hexyl acrylate, 2-ethylhexyl acrylate, lauryl acrylate or the like; ethylene-propylene-non-conjugated diene terpolymers such as ethylene-propylene-ethylidenenorbornene terpolymer, ethylene-propylene-hexadiene terpolymer, and the like; diene rubbers such as polybutadiene, styrene-butadiene copolymer, acrylonitrile-butadiene copolymer, butadiene-isoprene copolymer and the like; butylene-isoprene copolymer; and hydrogenation products of a copolymer of an aromatic vinyl compound (e.g. styrene or the like) with an aliphatic diene hydrocarbon compound (e.g. butadiene, isoprene or the like). These ordinary rubbery polymers can be used alone or in combiantion of two or more.

The thermoplastic elastomers (B-1") include, for example, aromatic vinyl-conjugated diene block copolymers such as styrene-butadiene block copolymers hydrogenated styrene-butadiene block copolymer, styrene-isoprene block copolymer, hydrogenated styrene-isoprene block copolymer and the like; low-crystalline polybutadiene resin, ethylene-propylene elastomer, styrene-grafted ethylene-propylene elastomer, thermoplastic polyester elastomer, and ethylenic ionomer resin.

When the (A) component is mixed with (B-2') a rubber-reinforced thermoplastic resin, an impact-resistant polymer composition can be obtained. The rubber-reinforced thermoplastic resin (B-2') is a copolymer obtained by copolymerizing, in the presence of a rubbery polymer, a monomer copolymerizable therewith or a mixture of the monomers, for example, an aromatic vinyl compound, a maleimide compound or a vinyl cyanide compound, and other vinyl monomer copolymerizable therewith. Preferable examples of the rubber-reinforced thermoplastic resin (B-2') include, for example, acrylonitrilebutadiene-styrene resin (ABS resin), acrylonitrile-ethylene-propylene-styrene resin (AES resin), methyl methacrylate-butadiene-styrene resin (MBS resin), acrylonitrile-butadiene-methyl methacrylate-styrene resin (AMBS resin), acrylonitrile-n-butyl acrylate-styrene resin (AAS resin) and rubber-modified polystyrene (high-impact polystyrene). These resins can be used alone or in combination of two or more.

The above-mentioned other thermoplastic resin (B-2") to be mixed with the (A) component includes a ductile high polymer resin and brittle high polymer resin. The "ductile high polymer resin" refers to a high polymer resin having a brittle fracture-ductile fracture transition temperature of less than 25°C. Specific examples of the ductile high polymer resin includes a polycarbonate resin, a polyester resin, a polyamide resin, a polyethersulfone resin, a polysulfone resin and a polyimide resin.

The "brittle high polymer resin" refers to a high polymer resin having a brittle fracture-ductile fracture transition temperature of 25°C or more. Specific examples of the brittle high polymer resin include a styrene resin, a polyolefin, a vinyl chloride resin, an acrylic resin, a polyphenylene ether resin and a polyphenylene sulfide resin. The above styrene resin includes a polystyrene, a polychlorostyrene, a poly-α-methylstyrene, a styrene-acrylonitrile copolymer, a styrene-methyl methacrylate copolymer, a styrene-maleic anhydride copolymer, a styrene-α-methylstyrene copolymer, a styrene-α-methylstyrene-methyl methacrylate terpolymer, a styrene-α-methylstyrene-acrylonitrile-methyl methacrylate quadripolymer and the like. These can be used alone or in admixture of two or more. The above polyolefin includes polyethylene, polypropylene and the like. When the brittle high polymer is used as the (B-2") component, the resulting thermoplastic resin becomes not only impact resistant but also heat resistant.

The weight ratio of the (A) component, i.e., the hydrogenation product of the ring opening (co)polymer to the (B) component is 5:95 to 99:1, preferably 10:90 to 95:5, more preferably 20:80 to 90:10, and especially preferably 25:75 to 80:20.

When it is desired that the thermoplastic resin composition of this invention has an excellent transparency, it is necessary to select the (A) component and (B) component so that the two have substantially equal reflactive indexes. In this case, the (B) component is preferably the rubbery polymer (B-1), and more preferably a hydrogenated styrene-butadiene random, block or block-random copolymer in which the styrene content is 20-45% by weight, or a copolymer of butadiene and an acrylate in which the weight ratio of butadiene to acrylate is 10-90:90-10, or a copolymer of not more than 30 parts by weight of styrene and/or acrylonitrile with 100 parts by weight of one of these copolymers, or a hydrogenation product of one of these copolymers.

In order to enhance the compatibility of the (B) component with the (A) component, the (B) component may be modified with a specific functional group such as epoxy group, carboxyl group, hydroxyl group, amino group, acid anhydride group or oxazoline group.

The thermoplastic resin composition of this invention can be prepared by kneading the (A) component with the (B) component by means of an extruder, a Bunbury mixer, a kneader, a roll or the like.

In order to enhance the compatibility between the two at the time of the melt-kneading, it is possible to add an unsaturated compound having the above-mentioned specific functional group and, if necessary, an organic peroxide.

The thermoplastic resin composition of this invention can be formed into various molded articles by an injection molding method, a sheet-extrusion method, a vacuum-forming method, a profile-molding method, an expansion-molding method, a press-molding method, a stampable molding method or the like.

To the thermoplastic resin composition of this invention may be appropriately added other polymers than the essential components depending upon the properties required.

When the thermoplastic resin composition is used, there may be added thereto various additives. For example, at least one filler such as glass fiber, carbon fiber, glass beads, asbestos, wollastonite, calcium carbonate, talc, barium sulfate, mica, potassium titanate, fluororesin, molybdenum disulfide or the like may be compounded with the thermoplastic resin composition of this invention. In addition, a known flame retarder, antioxidant or plasticizer may also be added.

The thermoplastic resin composition of this invention can be stabilized by incorporating thereinto a known antioxidant such as 2,6-di-tert-butyl-4-methylphenol, 2,2'-dioxy-3,3'-di-tert-butyl-5,5'-dimethyl-diphenylmethane, phenyl-β-naphthylamine or the like, or an ultraviolet absorber such as 2,4-dihdyroxybenzophenone, 2-hydroxy-4-methoxybenzophenone or the like. It may further contain additives which are conventionally used in resin processing, such as lubricant and the like for improving its processability.

The thermoplastic resin composition of this invention can be made into optial products, etc. by various known molding methods such as injection molding, compression molding, extrusion molding and the like.

The thermoplastic resin composition of this invention can be improved in heat resistance, optical properties, chemical resistance, wear resistance, resistance to moisture permeability, etc. by hard-coating on the surface thereof an inorganic compound, an organic silicon compound (e.g. silane coupling agent or the like), an acrylic resin, a vinyl resin, a melamine resin, an epoxy resin, a fluororesin, a silicone resin or the like according to a method such as thermal curing, ultraviolet curing, vacuum deposition, sputtering or ion plating.

The thermoplastic resin composition of this invention has good optical properties, low hygroscopicity and excellent heat-resistance based on the hydrogenated (co)polymer as the (A) component and also has excellent impact resistance and ductility, and hence, can be expected to be developed as a new modling material. In particular, when the thermoplastic resin composition comprises a rubbery polymer, it has excellent impact resistance and ductility and can be appropriately used in outer and inner trim materials of automobiles, various electric and electronic parts, hausings and optical materials.

Also, since the thermoplastic resin composition of this invention comprises a specific proportion of a thermoplastic resin it exhibits, with certainty, excellent heat resistance and light resistance, and simultaneously, has an improved fluidity. Accordingly, there can be provided a thermoplastic resin composition having excellent physical properties and good moldability.

The thermoplastic resin composition of this invention can appropriately be used in fields in which excellent heat resistance and light resistance are utilized, and the thermoplastic resin composition can be used as it is as a molding material for various parts for outer and inner trim parts of automobiles, electric and electronic parts and OA appliances.

### DESCRIPTION OF PREFERRED EMBODIMENTS

This invention is explained in more detail below referring to Examples; however, it should not be interpreted that the invention be restricted to the Examples. In the Examples, parts are by weight unless otherwise specified.

In the Examples, the following measurement methods were used:
- Hydrogenation degree:: Measured by NMR of 60 MHz.
- Dynstat impact strength:: Measured according to DIN 53453.
- Impact resistance:: Izod impact strength was measured according to ASTM D256, with notch of 1/8".
- Heat resistance:: Heat distortion temeprature (HDT) was measured according to ASTM D648 (18.6 kg/cm, 1/4").
- Ductility:: Tensile elongation was measured by subjecting a small dumbbell to a tensile test at a drawing speed of 50 mm/min using an autograph to determine the degree of elongation.
- Tensile strength:: Measured by a tensile test under the same conditions as in the case of the above tensile elongation.
- Light resistance:: E after 100 hours as measured by a color difference meter (QUV) manufactured by Gas Tester Co., Ltd. at 83°C.
- Fluidity:: Melt flow index measured according to JIS K7210 at 280°C under a load of 10 kg.

### Reference Example 1

### Preparation of Polymer A-1

To a nitrogen-purged reactor were fed 1,760 g of 8-methoxycarbonyltetracyclo[4.4.0.1ʼ⁵.1⁷ʼ¹⁰]-3-dodecene, 5,280 g of toluene and 130 g of 1-hexane as a molecular weight modifier. Thereto was added, as a ring opening polymerization catalyst, 30 ml of toluene solution containign 0.05 mol/liter of WCl₆, 15 ml of a toluene solution containing 0.1 mol/liter of paraldehyde and 47 ml of n-hexane solution containing 0.8 mol/liter of diethylaluminum chloride. The mixture was subjected to polymerization reaction at 50°C for 5 hours. To the reaction mixture was added 7 liters of an aqueous solution containing 350 g of triethanolamine, and the mixture was stirred to extract the catalyst into the aqueous phase. Then the organic phase was subjected to steam stripping to remove the solvent and water simultaneously. The resulting solid was dried to obtain 1,670 g of a polymer. The intrinsic viscosity (ηᵢₙₕ) of this polymer was 0.78 dl/g as measured in chloroform at 30°C at a concentration of 0.5 g/dl.

The 1,670 g of polymer obtained was dissolved in 17 liters of tetrahydrofuran. Thereto was added 167 g of a palladium-alumina catalyst (palladium concentration = 5%) as a hydrogenation catalyst. The mixture was subjected to hydrogenation reaction at 165°C for 5 hours at a hydrogen gas pressure of 10 kg/cm. After the completion of the reaction, the hydrogenation catalyst was removed from the reaction mixture to obtain a polymer solution (hereinafter referred to as Polymer Solution A-1). The hydrogenation degree of the polymer in this hydrogenation reaction was 100%.

Five liters of Polymer Solution A-1 was added to 50 liters of a mixed solvent consisting of 40 parts by volume of tetrahydrofuran and 60 parts by volume of methanol, in one hour with stirring, whereby a solid was coagulated. The solid was collected by filtration, and the resulting polymer was added to 5 liters of methanol and heated for 6 hours under reflux. The solid was separated by filtration and dried to recover a polymer (hereinafter referred to as Polymer A-1).

Polymer A-1 was then measured for properties. The results are shown in Table 1. Glass transition temperature was measured by a differential scanning calorimeter. Mw/Mn is a ratio of weight-average molecular weight Mw to number average molecular weight Mn. The content of low-molecular weight polymer is a content of low-molecular weight polymers having a molecular weight of 3,000 or less. Molecular weight was determined by gel permeation chromatography.

Polymer A-1 was molded to obtain a molded article having a Dynstat impact strength of 1,600 kg/cm. The article contained no foam and had a smooth surface with no adhesion.

### Reference Example 2

### Preparation of Polymer A-2

The same procedure as in Reference Example 1 was repeated, except that 1,760 g of 8-ethoxycarbonyltetracyclo[4.4.0.1ʼ⁵.1⁷ʼ¹⁰]-3-dodecene was substituted for the 1,760 g of 8-methoxycarbonyltetracyclo-[4.4.0.1ʼ⁵.1⁷ʼ¹⁰]-3-dodecene, to prepare a hydrogenated polymer (hereinafter referred to as Polymer A-2). The properties of Polymer A-2 were as shown in Table 1.

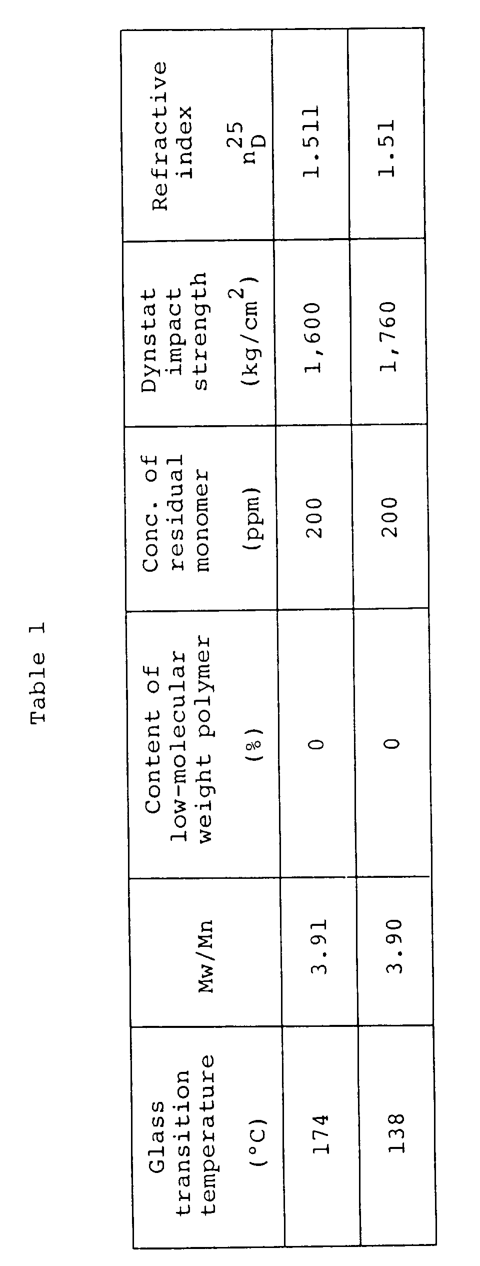

### Examples 1 to 11 and Comparative Examples 1 to 11

Polymer A-1 (hydrogenation product of poly[3,5-(8-methyl-8-methoxycarbonyltricyclo[5.2.1.0ʼ⁶]decylene)ethylene]) obtained in Reference Example 1 or Polymer A-2 (hydrogenation product of poly[3,5-(8-methyl-8-ethoxycarbonyltricyclo[5.2.1.0ʼ⁶]decylene)ethylene]) obtained in Reference Example 2 was mixed with other polymers as shown in Table 2 to prepare various compositions. The compositions thus obtained were measured for properties to obtain the results shown in Table 2.

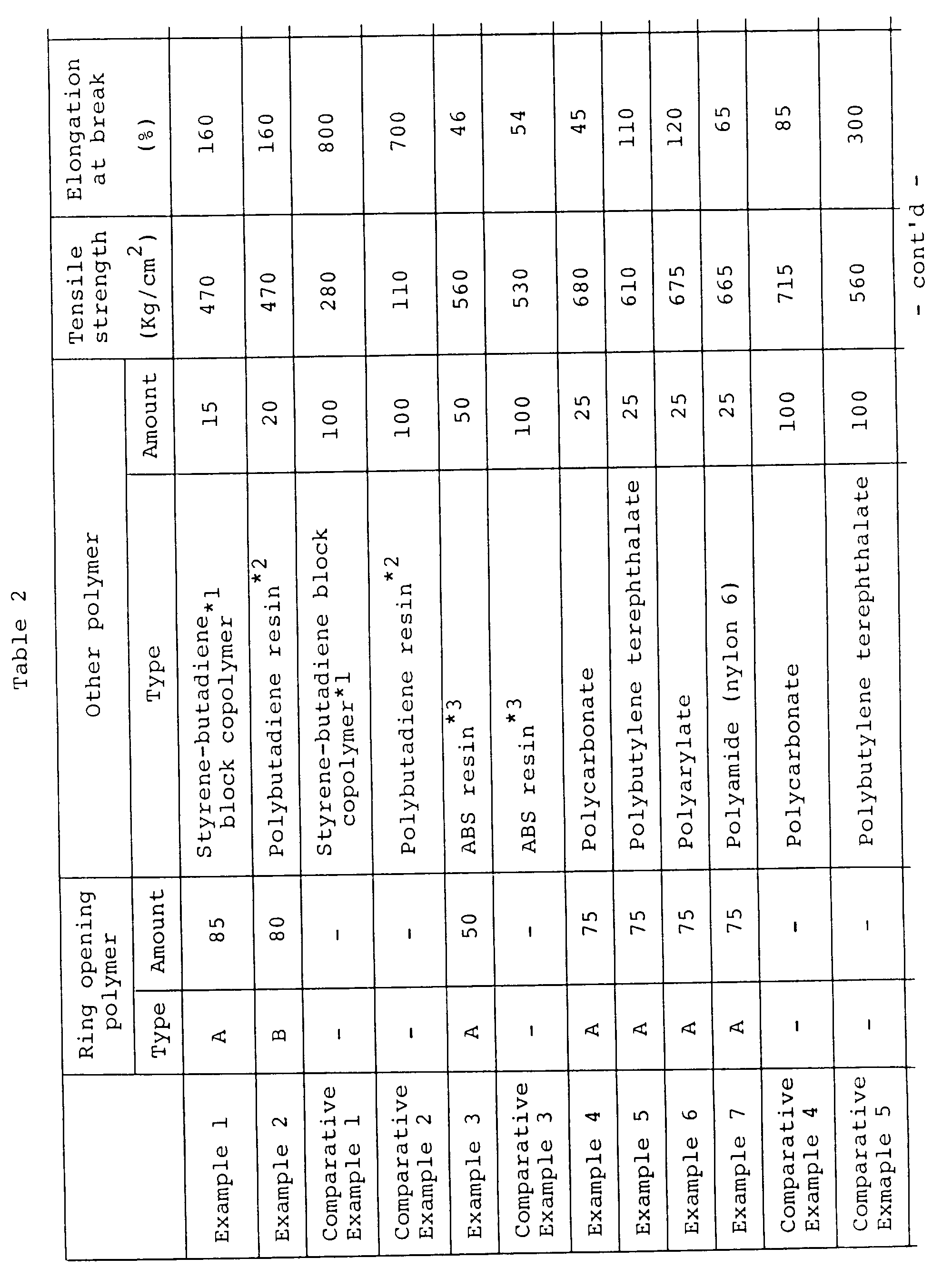

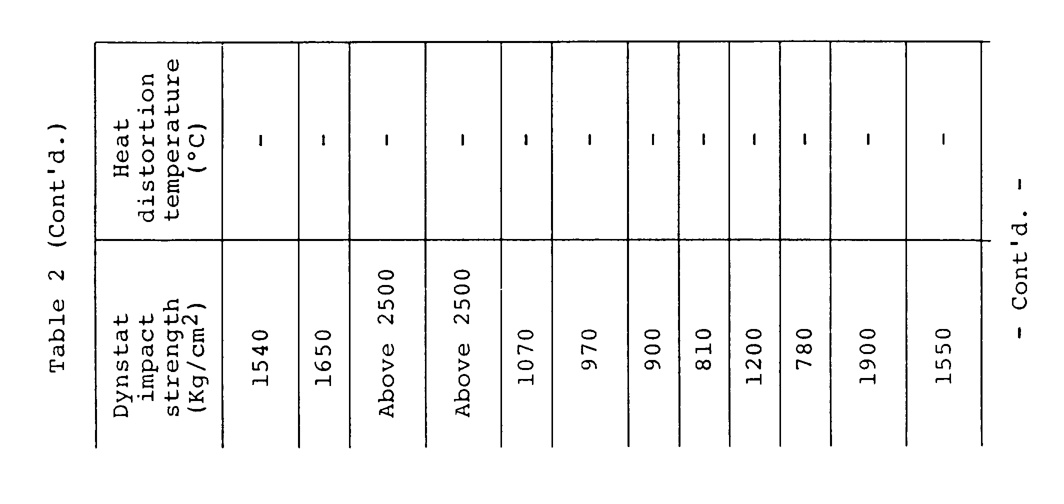

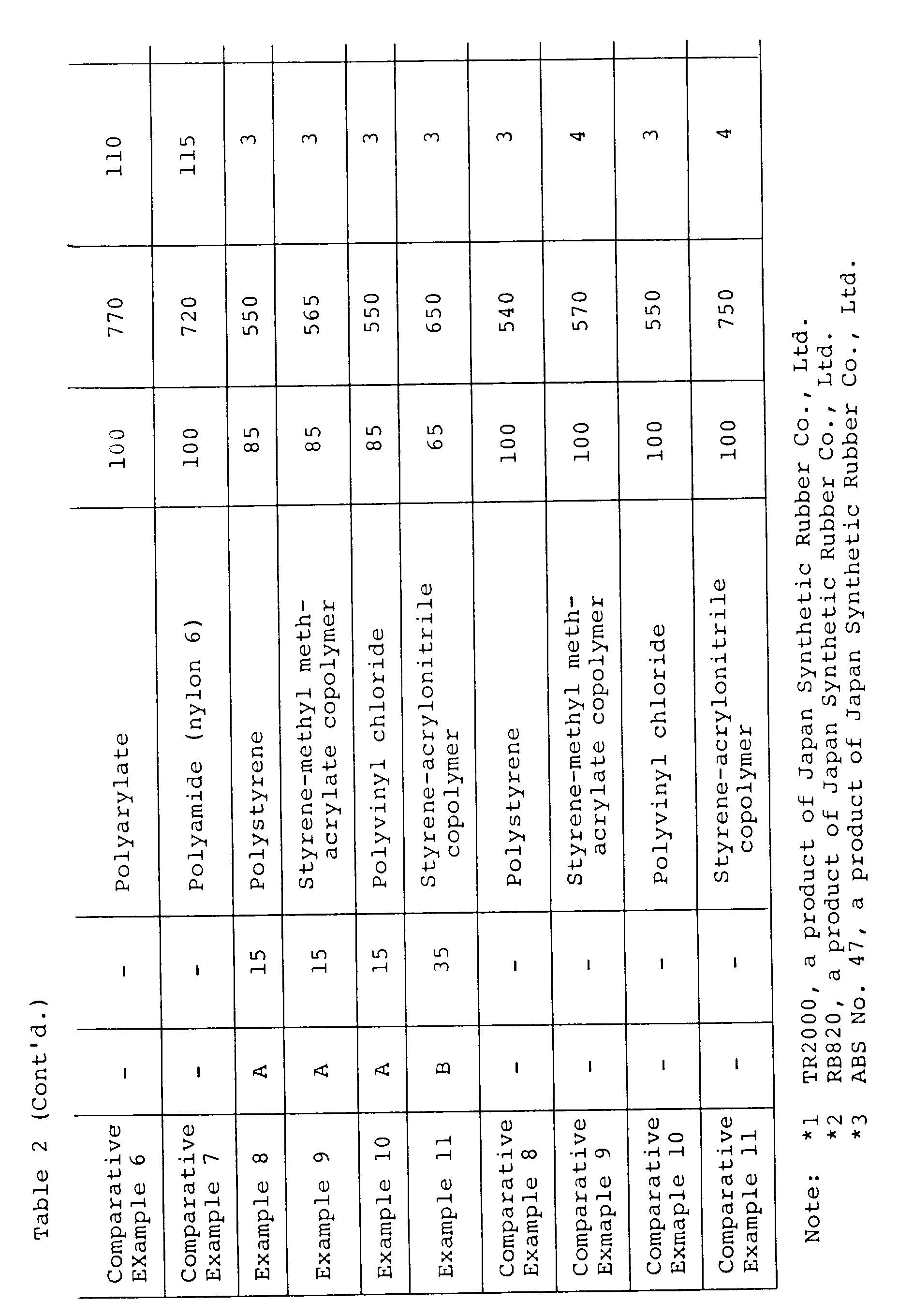

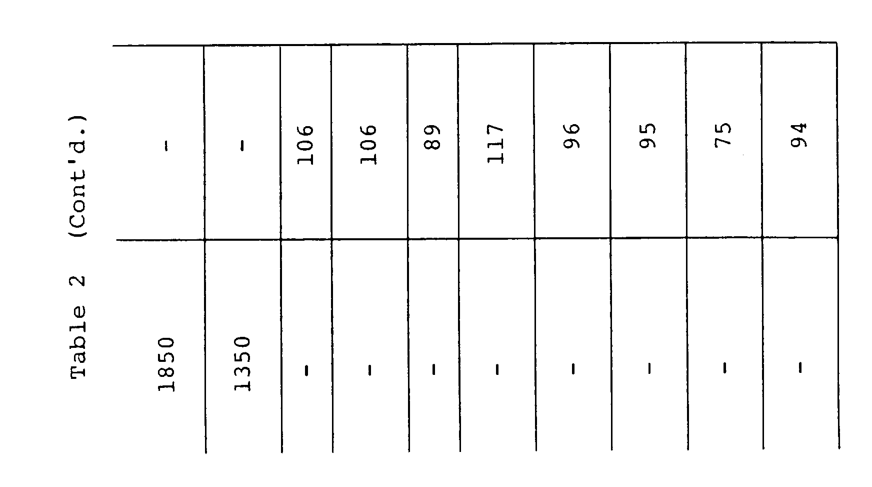

### Reference Example 3

### Preparation of Polymer A-3

The same procedure as in Reference Example 1 was repeated, except that 500 g of 8-methyl-8-carboxymethyltetracyclo [4.4.0.1ʼ⁵.1⁷ʼ¹⁰]-3-dodecene which is represented by structural formula (1): 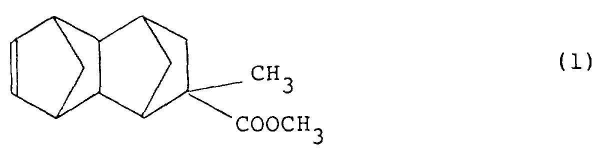 was substituted for the 1,760 g of 8-methoxycarbonyltetracyclo[4.4.0.1ʼ⁵.1⁷ʼ¹⁰]-3-dodecene, to prepare a ring-opening polymer having an intrinsic viscosity (ηᵢₙₕ) of 0.56 dl/g as measured in chloroform at 30°C at a concentration of 0.5 g/dl, and the polymer thus obtained was hydrogenated in the same manner as Reference Example 1 to obtain a hydrogenated polymer (hereinafter referred to as Polymer A-3).

The hydrogenation degree of Polymer A-3 was substantially 100% and the refractive index (n$\frac{\text{25}}{\text{D}}$) thereof was 1.512.

### Reference Example 4

### Preparation of Polymer A-4

The same procedure as in Reference Example 1 was repeated, except that 5-carboxymethylbicyclo-[2.2.1]-2-heptene having structural formula (2): 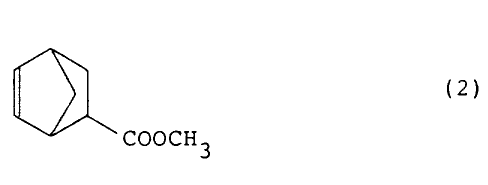 was substituted for the 8-methoxycarbonyltetracyclo-[4.4.0.1ʼ⁵.1⁷ʼ¹⁰]-3-dodecene, to prepare a polymer having an intrinsic viscosity (ηᵢₙₕ) of 0.56 dl/g as measured in chloroform at 30°C at a concentration of 0.5 g/dl. The polymer thus obtained was hydrogenated in the same manner as in Reference Example 1 to obtain a hydrogenated polymer (hereinafter referred to as Polymer A-4).

The hydrogenation degree of Polymer A-4 was substantially 100% and the refractive index thereof (n$\frac{\text{25}}{\text{D}}$) was 1.510.

### Reference Example 5

### Preparation of Polymer A-5 for Comparison

The same procedure as in Reference Example 1 was repeated to obtain an unhydrogenated polymer (hereinafter referred to as Polymer A-5). The refractive index (n$\frac{\text{25}}{\text{D}}$) of Polymer A-5 was 1.542.

### Reference Example 6

### Preparation of Rubbery Polymer B-1-i

Into a 5-liter autoclave were charged 2,500 g of degassed and dehydrated cyclohexane, 160 g of styrene and 340 g of 1,3-butadiene, and thereafter, 2.5 g of tetrahydrofuran and 0.34 g of n-butyllithium were added, after which the resulting mixture was subjected to polymerization, during which the temperature rose from 30°C to 80°C.

When the conversion reached substantially 100%, 2,6-di-tert-butylcatechol was added, and the solvent was removed by a steam-stripping method. The residue thus obtained was dried on hot roll at 120°C to obtain a styrene-butadiene copolymer having a vinyl content of 30% by weight and a bound styrene content of 32% by weight.

The thus obtained styrene-butadiene copolymer was charged into a 3-liter autoclave and cyclohexane was added thereto to prepare a 15% by weight copolymer solution in cyclohexane. The air in the autoclave was replaced with a nitrogen gas, and then, a catalyst solution previously prepared in a separate vessel in which nickel naphthenate/n-butyllithium/tetrahydrofuran = 1/8/20 by mole was charged thereinto in a proportion of 1 mole of nickel per 2,000 mole of the olefin portion.

Thereafter, a hydrogen gas was introduced into the reaction system to conduct hydrogenation at 70°C. The degree of hydrogenation was controlled based on the amount of hydrogen absorbed and consumed, and thereafter, the hydrogen in the system was replaced with a nitrogen gas, after which 2,6-di-tert-butyl-p-cresol (antioxidant) was added to the system in a proportion of 1% by weight.
Removal of catalyst and coagulation were repeated and then the product was dried on a roll in a conventional manner to obtain a hydrogenated diene copolymer having a hydrogenation degree of 95% (hereinafter referred to as Rubbery Polymer B-1-i).

### Reference Example 7

### Preparation of Rubbery Polymer B-1-ii

To emulsion-polymerization were subjected 60 parts of n-butyl acrylate, 15 parts of butadiene, 22 parts of acrylonitrile and 3 parts of divinylbenzene, to obtain a n-butyl acrylate-butadiene-acrylonitrile copolymer (hereinafter referred to as Rubbery Polymer B-1-ii).

### Reference Example 8

### Preparation of Rubbery Polymer B-1-iii

To emulsion-polymerization were subjected 60 parts of n-butyl acrylate, 15 parts of butadiene and 25 parts of acrylonitrile to prepare a copolymer, and the copolymer thus obtained was subjected to coagulation and drying. The copolymer thus obtained was dissolved in a solvent and the resulting solution was subjected to hydrogenation to obtain a hydrogenated copolymer (hereinafter referred to as Rubbery Polymer B-1-iii).

Other rubbery polymers used as the (B-1) component in the following Examples and Comparative Examples were as follows:

Rubbery Polymer B-1-iv: Commercially available hydrogenated styrene-butadiene-styrene block copolymer (Kraton G 1650, a trade name of Shell).

Rubbery Polymer B-1-v: Commercially available hydrogenated styrene-isoprene block copolymer (Kraton G 1701, a trade name of Shell).

Rubbery Polymer B-1-vi: Commercially available hydrogenated butadiene-acrylonitrile copolymer (THERBAN 1707, a trade name of Bayer).

Rubbery Polymer B-1-vii: Commercially available styrene-butadiene-styrene block copolymer (JSR TR2000, a trade name of Japan Synthetic Rubber Co., Ltd.)

Rubbery Polymer B-1-viii: Commercially available 1,2-polybutadiene (JSR RB 820, a trade name of Japan Synthetic Rubber Co., Ltd.).

Rubbery Polymer B-1-ix: Acrylic rubber obtained by subjecting 97 parts of 2-ethylhexyl acrylate and 3 parts of divinylbenzene to emulsion polymerization.

### Examples 12 to 25 and Comparative Examples 12 and 13:

With the compounding recipe shown in Table 3, Polymer A-3 to Polymer A-5 obtained in Reference Examples 3 to 5 and Rubbery Polymers B-1-i to B-1-iii obtained in Reference Examples 7 to 9 and Rubbery Polymers B-1-iv to B-1-v shown above were kneaded using a kneader roll, ground and then molded by an injection molding method to obtain molded articles of thermoplastic resin composition. Impact resistance and ductility of each of the molded articles were evaluated to obtain the results shown in Table 3.

From the results of Table 3, it can be seen that when no rubbery polymer (B-1) was mixed as in Comparative Example 11, the impact strength and tensile elongation of the resin composition are low and when unhydrogenated polymer was used as in Comparative Example 12 the impact resistance and ductility were not improved even when the rubbery polymer (B-1) was mixed.

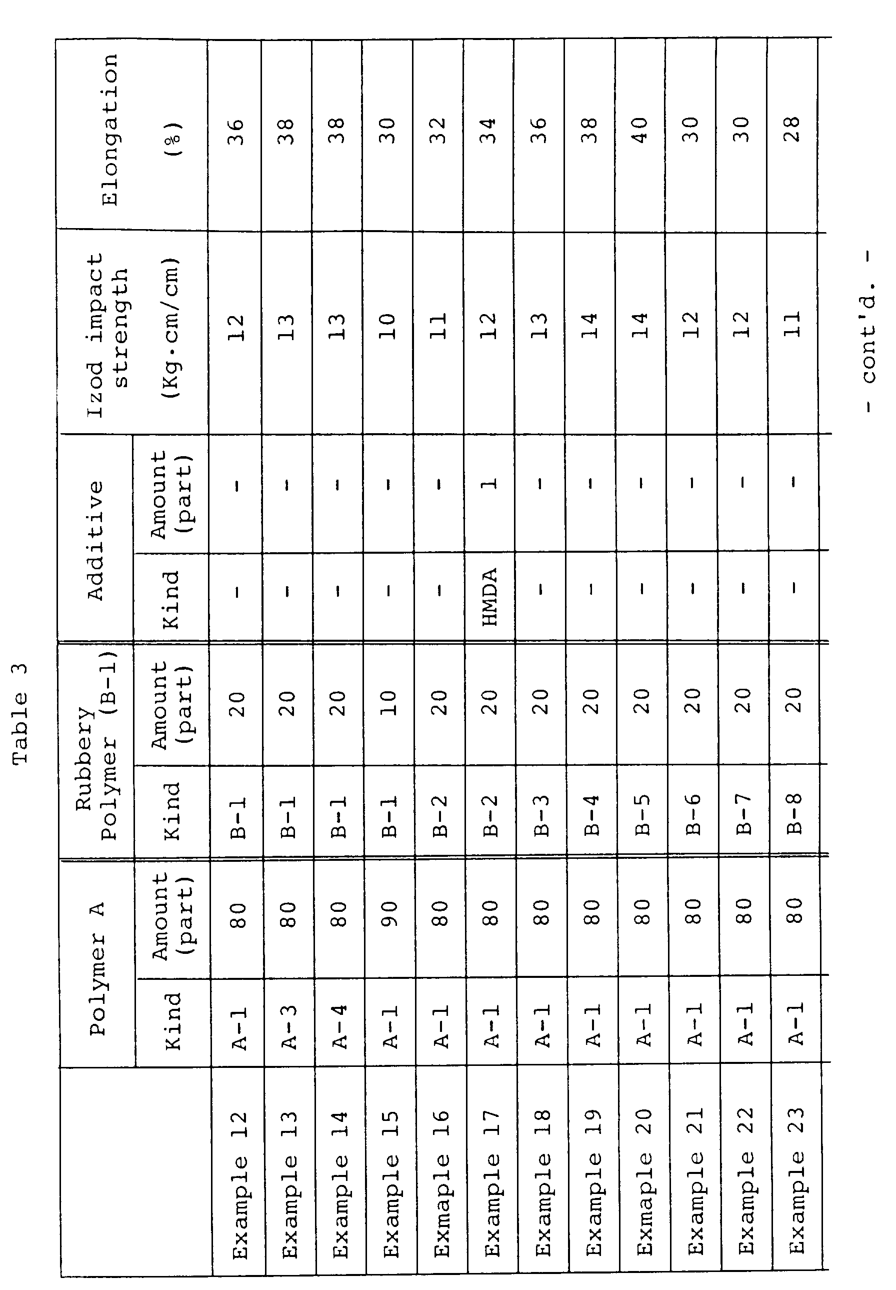

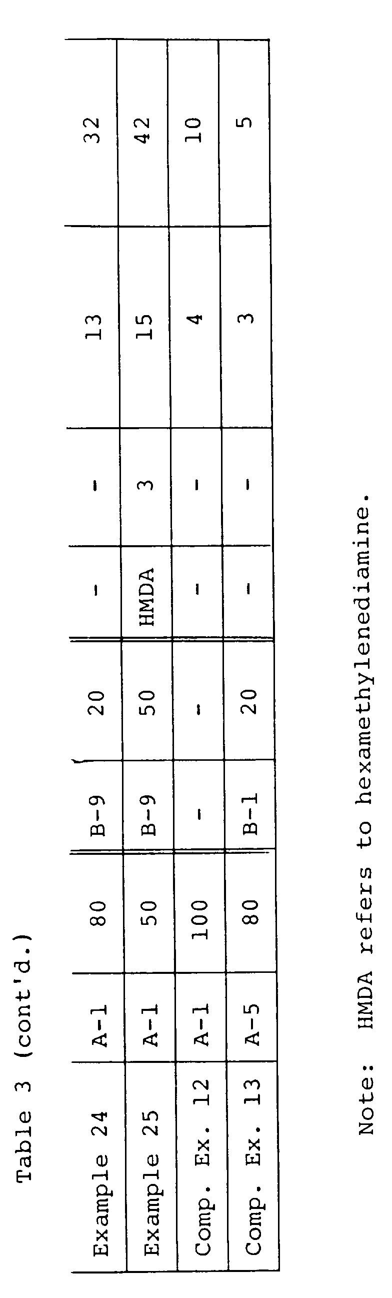

### Examples 26 to 49 and Comparative Examples 14 to 20

Polymer A-1, A-3 or A-4 as the (A) component and the following (B-2) components were used.
- B-2-i:: Polystyrene (TOPOREX 600 manufactured by Mitsui Toatsu Chemicals Industries Inc.)
- B-2-ii:: Styrene-methyl methacrylate copolymer (ESTYRENE MS-600 manufactured by Nippon Steel Chemical Co., Ltd.)
- B-2-iii:: Polyvinyl chloride (SUNNER S600 manufactured by Tokuyama Soda Co., Ltd.) having added thereto an organotin stabilizer
- B-2-iv:: Acrylonitrile-styrene copolymer (JSR AS230 manufactured by Japan Synthetic Rubber Co., Ltd.)
- B-2-v:: Polycarbonate (A-2200 manufactured by Idemitsu Petrochemical Co., Ltd.)
- B-2-vi:: Polybutylene terephthalate (PBT) (TORAY PBT1401 manufactured by TORAY INDUSTRIES, INC.)
- B-2-vii:: Polyamide (nylon 6) (T-802 manufactured by TOYOBO CO., LTD.)
- B-2-viii:: High impact polystyrene

According to the recipe shown in Table 4, the (A) component and the (B-2) component were blended and the resulting blend was kneaded at 280°C for 5 minutes by means of a Brabender mixer to obtain thermoplastic resin compositions. Each of the thermoplastic resin compositions obtained was molded at 280°C by means of an injection machine to prepare a test specimen of each composition. The test specimen was subjected to measurement of heat resistance, light resistance and fluidity which is an index of moldability, to obtain the results shown in Table 4.

The thermoplastic resin compositions of Examples 26 to 49 were excellent in heat resistance and light resistance, and also exhibited high fluidity.

On the other hand, the thermoplastic resin composition of Comparative Example 14 has very low fluidity because the composition did not contain the (B-2) component.

In Comparative Examples 15 to 20, the compositions obtained were inferior in heat resistance and/or light resistance because they did not contain the (A) component.

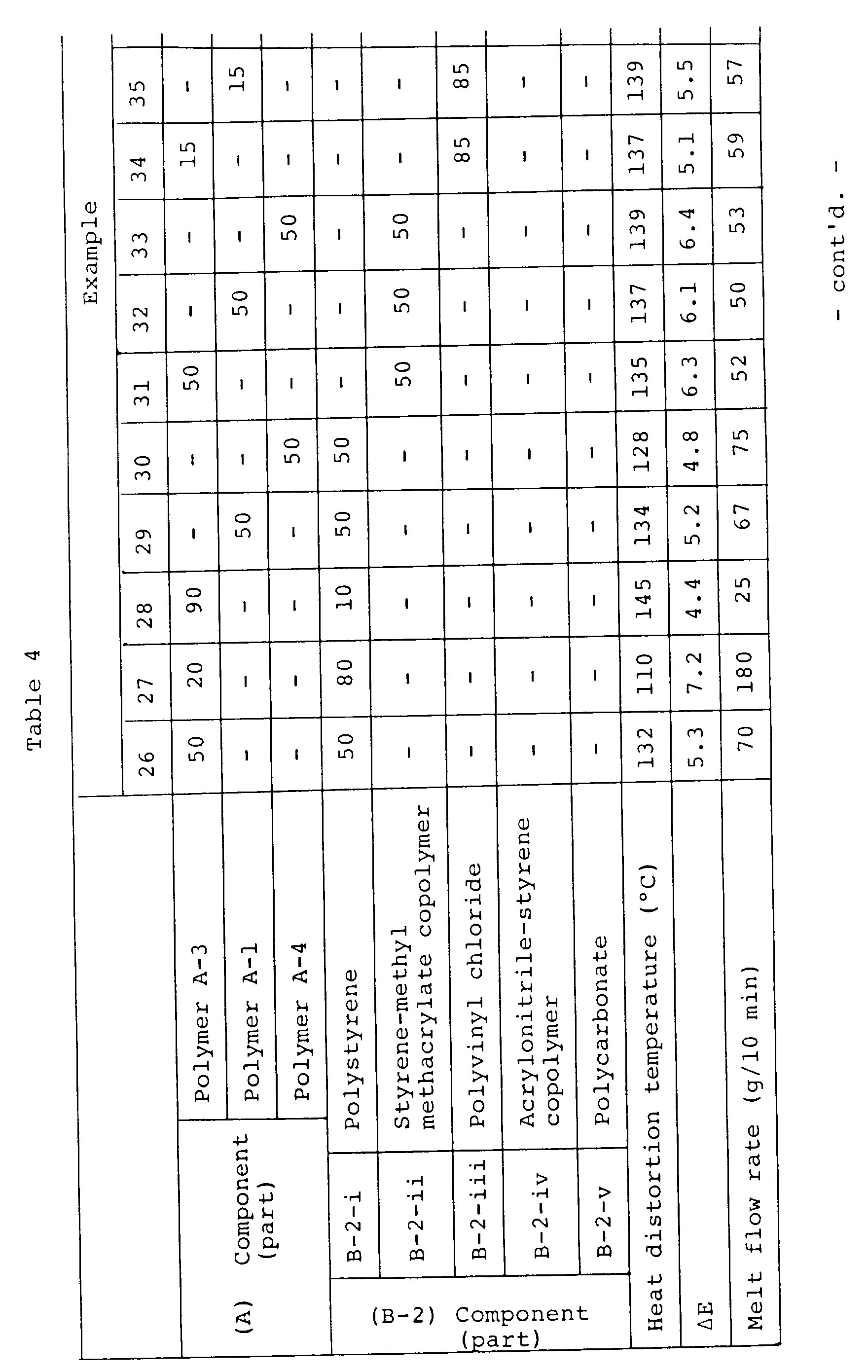

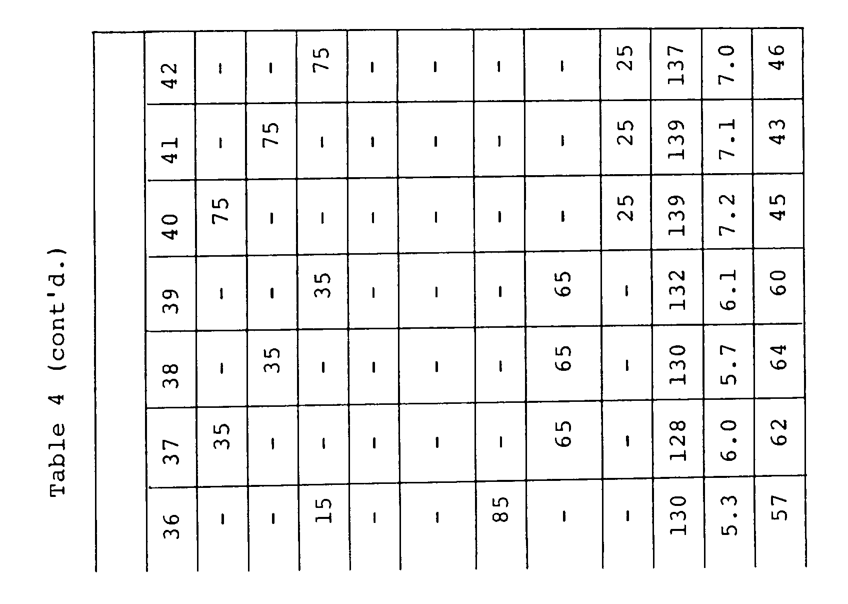

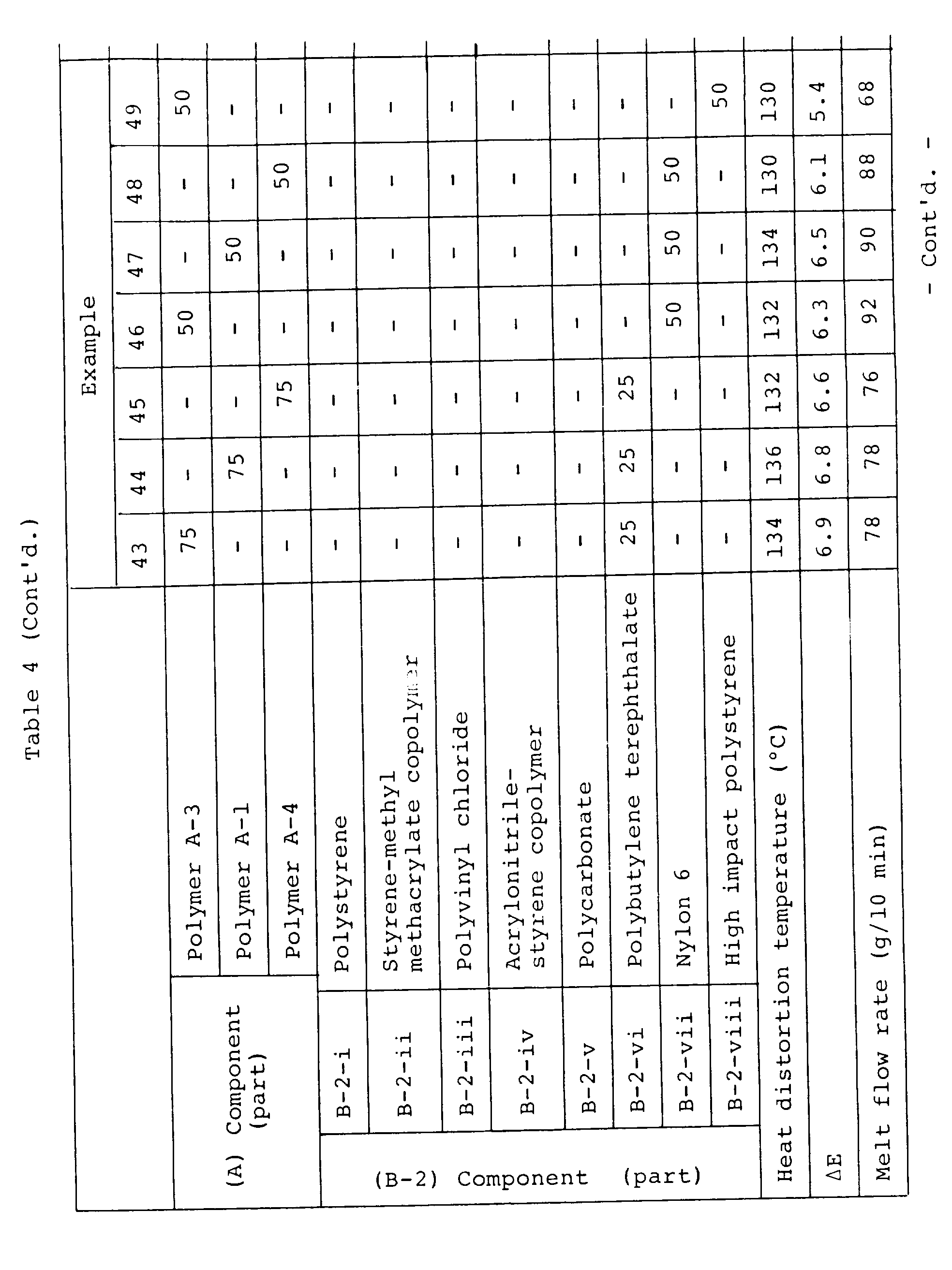

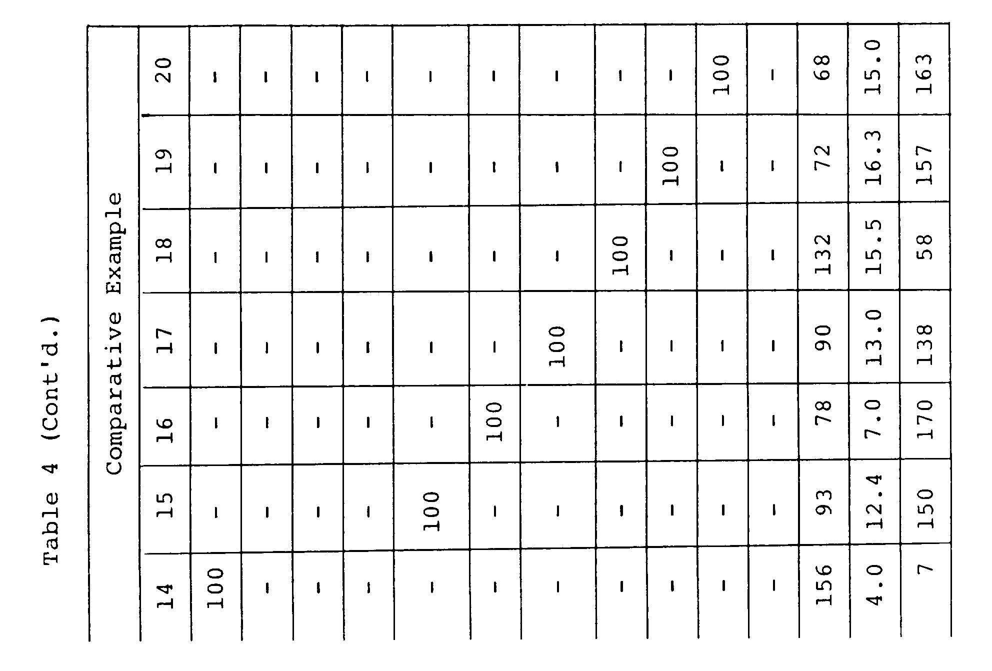

## Claims

1. A thermoplastic resin composition consisting essentially of (A) 5 to 99% by weight of a hydrogenated polymer having a hydrogentation degree of at least 95%,which hydrogenated polymer is a hydrogenation product of a polymer obtained by subjecting at least one norbornene derivative represented by general formula (I) or a mixture of the norbornene derivative and a monomer copoylmerizable therewith to ring-opening polymerization and (B) 95 to 1% by weight of at least one member selected from the group consisting of (B-1) a rubbery polymer and (B-2) a thermoplastic resin: 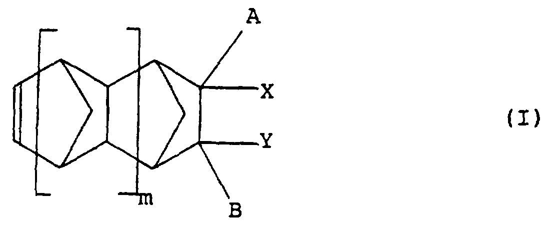 wherein A and B are independently hydrogen atoms or hydrocarbon groups having 1 to 10 carbon atoms; X is a hydrogen atom or a hydrocarbon group having 1 to 10 carbon atoms; Y is a -(CH₂)ₙCOOR¹ or - (CH₂)ₙ OCOR¹ group (R¹ is a hydrocarbon group having 1 to 20 carbon atoms and n is 0 or an integer of 1 to 10); and m is 0 or 1.

2. The thermoplastic resin composition according to Claim 1, wherein the weight ratio of the (A) component to the (B) component is 10-95/90-5.

3. The thermoplastic resin composition according to Claim 1, wherein the weight ratio of the (A) component to the (B) component is 20-90/80-10.

4. The thermoplastic resin composition according to Claim 1, wherein X is a hydrogen atom Y is an ester group and one of A and B is a methyl group, the other being a hydrogen atom.

5. The thermoplastic resin composition according to Claim 1, wherein the (B) component is at least one member selected from (B-1') an ordinary rubbery polymer and (B-1") a thermoplastic elastomer.

6. The thermoplastic resin composition according to Claim 1, wherein the (B) component is at least one member selected from the group consisting of (B-2') a rubber-reinforced thermoplastic resin and (B-2") other thermoplastic resin.

7. The thermoplastic resin composition according to Claim 1, wherein the (B-2') component is a rubber-reinforced styrene resin.

8. The thermoplastic resin composition according to Claim 1, wherein the (B-2") component is at least one member selected from the group consisting of polyamide, polyester, polyolefin, polyvinyl chloride, polycarbonate, polyphenylene ether, polyphenylenesulfone and polystyrene.

9. The thermoplastic resin composition according to Claim 1, wherein the polymer before hydrogenation of the (A) component has a polystyrene-reduced weight average molecular weight of 10,000 to 3,000,000.

10. The thermoplastic resin composition according to Claim 9, wherein the molecular weight is 50,000 to 900,000.

## Patentansprüche

1. Thermoplastische Harzzusammensetzung, die im wesentlichen aus (A) 5 bis 99 Gew.-% eines hydrierten Polymers mit einem Hydrierungsgrad von mindestens 95 %, das ein Hydrierungsprodukt eines Polymers ist, das durch ringöffnende Polymerisation mindestens eines Norbornen-Derivats der allgemeinen Formel (I) oder eines Gemisches aus dem Norbornen-Derivat und einem damit copolymerisierbaren Monomer erhalten wurde, und (B) 95 bis 1 Gew.-% eines kautschukartigen Polymers (B-1) und/oder eines thermoplastischen Harzes (B-2) 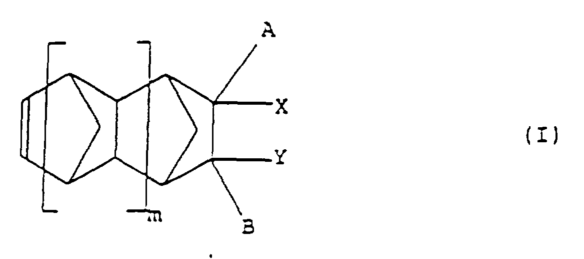 besteht, worin bedeuten:
A und B unabhängig voneinander Wasserstoffatome oder Kohlenwasserstoffgruppen mit 1 bis 10 Kohlenstoffatomen, X ein Wasserstoffatom oder eine Kohlenwasserstoffgruppe mit 1 bis 10 Kohlenstoffatomen, Y eine Gruppe -(CH₂)ₙCOOR¹ oder -(CH₂)ₙOCOR¹ (wobei R¹ eine Kohlenwasserstoffgruppe mit 1 bis 20 Kohlenstoffatomen und n 0 oder eine ganze Zahl von 1 bis 10 bedeuten) und m 0 oder 1.

2. Thermoplastische Harzzusammensetzung nach Anspruch 1, wobei das Gewichtsverhältnis von Bestandteil (A) zu Bestandteil (B) 10-95/90-5 beträgt.

3. Thermoplastische Harzzusammensetzung nach Anspruch 1, wobei das Gewichtsverhältnis von Bestandteil (A) zu Bestandteil (B) 20-90/80-10 beträgt.

4. Thermoplastische Harzzusammensetzung nach Anspruch 1, wobei X ein Wasserstoffatom, Y eine Estergruppe und einer der Substituenten A und B eine Methylgruppe und der andere ein Wasserstoffatom bedeuten.

5. Thermoplastische Harzzusammensetzung nach Anspruch 1, wobei der Bestandteil (B) ein gewöhnliches kautschukartiges Polymer (B-1') und/oder ein thermoplastisches Elastomer (B-1") ist.

6. Thermoplastische Harzzusammensetzung nach Anspruch 1, wobei der Bestandteil (B) ein kautschukverstärktes thermoplastisches Harz (B-2') und/oder ein anderes thermoplastisches Harz (B-2") ist.

7. Thermoplastische Harzzusammensetzung nach Anspruch 1, wobei der Bestandteil (B-2') ein kautschukverstärktes Styrolharz ist.

8. Thermoplastische Harzzusammensetzung nach Anspruch 1, wobei der Bestandteil (B-2") mindestens ein unter Polyamiden, Polyestern, Polyolefinen, Polyvinylchlorid, Polycarbonaten, Polyphenylenethern, Polyphenylensulfonen oder Polystyrol ausgewähltes Polymer ist.

9. Thermoplastische Harzzusammensetzung nach Anspruch 1, wobei das Polymer vor der Hydrierung des Bestandteils (A) ein auf Polystyrol bezogenes Gewichtsmittel des Molekulargewichts von 10 000 bis 3 000 000 aufweist.

10. Thermoplastische Harzzusammensetzung nach Anspruch 9, wobei das Molekulargewicht 50 000 bis 900 000 beträgt.

## Revendications

1. Composition à base de résine thermoplastique consistant essentiellement (A) en 5 à 99 % en poids d'un polymère hydrogéné ayant un degré d'hydrogénation d'au moins 95 %, ce polymère hydrogéné étant un produit d'hydrogénation d'un polymère obtenu en soumettant au moins un dérivé de norbornène représenté par la formule générale (I) ou un mélange du dérivé de norbornène et d'un monomère copolymérisable avec celui-ci, à une polymérisation par ouverture de cycle et (B) en 95 à 1 % en poids d'au moins un composant choisi parmi (B-1) un polymère caoutchouteux et (B-2) une résine thermoplastique : 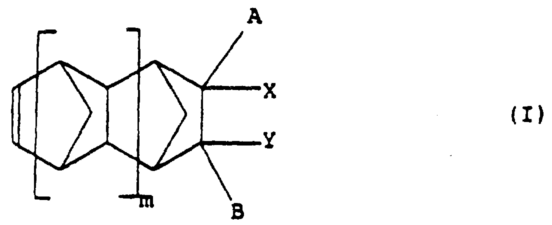 dans laquelle A et B représentent indépendamment des atomes d'hydrogène ou des groupes hydrocarbonés comportant de 1 à 10 atomes de carbone ; X représente un atome d'hydrogène ou un groupe hydrocarboné comportant de 1 à 10 atomes de carbone ; Y représente un groupe -(CH₂)ₙCOOR¹ ou -(CH₂)ₙOCOR¹ (R¹ représente un groupe hydrocarboné comportant de 1 à 20 atomes de carbone, et n est égal à 0 ou représente un entier de 1 à 10) ; et m est égal à 0 ou 1.

2. Composition à base de résine thermoplastique selon la revendication 1, dans laquelle le rapport pondéral du composant (A) au composant (B), est de 10 à 95/90 à 5.

3. Composition à base de résine thermoplastique selon la revendication 1, dans laquelle le rapport pondéral du composant (A) au composant (B), est de 20 à 90/80 à 10.

4. Composition à base de résine thermoplastique selon la revendication 1, dans laquelle X représente un atome d'hydrogène, Y représente un groupe ester, et l'un des groupes A et B représente un groupe méthyle, l'autre représentant un atome d'hydrogène.

5. Composition à base de résine thermoplastique selon la revendication 1, dans laquelle le composant (B) comprend au moins une substance choisie parmi (B-1') un polymère caoutchouteux ordinaire et (B-1") un élastomère thermoplastique.

6. Composition à base de résine thermoplastique selon la revendication 1, dans laquelle le composant (B) comprend au moins une substance choisie parmi (B-2') une résine thermoplastique renforcée par un caoutchouc et (B-2") une autre résine thermoplastique.

7. Composition à base de résine thermoplastique selon la revendication 1, dans laquelle le composant (B-2') est une résine de type styrène renforcée par un caoutchouc.

8. Composition à base de résine thermoplastique selon la revendication 1, dans laquelle le composant (B-2') comprend au moins une substance choisie parmi un polyamide, un polyester, une polyoléfine, un poly(chlorure de vinyle), un polycarbonate, un polyéther de phénylène, une polyphénylènesulfone et un polystyrène.

9. Composition à base de résine thermoplastique selon la revendication 1, dans laquelle le polymère avant hydrogénation du composant (A), a un poids moléculaire moyen en poids étalonné par rapport au polystyrène, de 10 000 à 3 000 000.

10. Composition à base de résine thermoplastique selon la revendication 9, dans laquelle le poids moléculaire est de 50 000 à 900 000.
